(19) Europäisches Patentamt

European Patent Office

Office européen des brevets

(11) **EP 1 539 523 B1**

(12) **EUROPÄISCHE PATENTSCHRIFT**

(45) Veröffentlichungstag und Bekanntmachung des Hinweises auf die Patenterteilung:
**03.05.2006 Patentblatt 2006/18**

(21) Anmeldenummer: **03798143.8**

(22) Anmeldetag: **30.08.2003**

(51) Int Cl.:
***B60K 31/00*** *(2006.01)*    ***B60T 7/22*** *(2006.01)*

(86) Internationale Anmeldenummer:
**PCT/EP2003/009643**

(87) Internationale Veröffentlichungsnummer:
**WO 2004/028847 (08.04.2004 Gazette 2004/15)**

(54) **VERFAHREN UND VORRICHTUNG ZUR AUSLÖSUNG EINES SELBSTTÄTIGEN NOTBREMSVORGANGS EINES FAHRZEUGS**

METHOD AND DEVICE FOR TRIGGERING AN AUTOMATIC EMERGENCY BRAKING PROCESS OF A VEHICLE

PROCEDE ET DISPOSITIF POUR DECLENCHER UN PROCESSUS DE FREINAGE D'URGENCE A ACTIONNEMENT AUTOMATIQUE D'UN VEHICULE

(84) Benannte Vertragsstaaten:
**DE FR GB IT NL SE**

(30) Priorität: **20.09.2002 DE 10243978**
**16.12.2002 DE 10258617**

(43) Veröffentlichungstag der Anmeldung:
**15.06.2005 Patentblatt 2005/24**

(73) Patentinhaber: **DaimlerChrysler AG**
**70567 Stuttgart (DE)**

(72) Erfinder:
• **DÖRR, Heiko**
**10715 Berlin (DE)**
• **GUT, Matthias**
**72760 Reutlingen (DE)**
• **MENDT, Wolfram**
**38642 Goslar (DE)**
• **SCHÄFFERS, Lorenz**
**73235 Weilheim (DE)**
• **SCHERHAUFER, Ingo**
**73663 Berglen (DE)**
• **TROST, Jürgen**
**72661 Grafenberg (DE)**
• **VOLK, Gert**
**70563 Stuttgart (DE)**
• **VOSS, Ursula**
**70563 Stuttgart (DE)**

(56) Entgegenhaltungen:
EP-A- 0 976 627          WO-A-02/43029
US-A- 4 048 613          US-A- 5 410 484
US-A- 5 529 138          US-B1- 6 238 021

• PATENT ABSTRACTS OF JAPAN Bd. 1995, Nr. 03, 28. April 1995 (1995-04-28) & JP 6 338000 A (TOYOTA CENTRAL RES & DEV LAB INC; others: 01), 6. Dezember 1994 (1994-12-06)

**Beschreibung**

Die Erfindung betrifft ein Verfahren und eine Vorrichtung zur Auslösung eines selbsttätigen Notbremsvorgangs eines Fahrzeugs, insbesondere eines Lastkraftwagens, nach dem Oberbegriff des Patentanspruchs 1 bzw. des Patentanspruchs 22. Die Erfindung bietet eine Assistenzfunktion zur Vermeidung eines Auffahrens des Fahrzeugs auf ein vorausfahrendes Fahrzeug bzw. zur Verminderung der Unfallfolgen, wenn ein Auffahren unvermeidbar ist, wobei die Auslösung einer Fahrerwarnung erfolgt, wenn eine gegebene Warnbedingung erfüllt ist. Die Erfüllung der Warnbedingung gibt an, dass nach Ablauf einer vorgegebenen Warnzeitdauer der selbsttätige Notbremsvorgang auszulösen ist.

Ein Verfahren bzw. eine Vorrichtung gemäß dem Oberbegriff der Ansprüche 1 bzw. 22 ist aus der Druckschrift WO 02 43 029 A bekannt.

In der Druckschrift DE 41 01 759 A1 ist ein automatisches Bremssystem für ein Fahrzeug veröffentlicht. Das Bremssystem umfasst allgemein einen Geschwindigkeitssensor zum Feststellen der Fahrzeuggeschwindigkeit und einen Abstandssensor zum Feststellen des Abstands zwischen dem Fahrzeug und dem vorausfahrenden Fahrzeug. Das Bremssystem bestimmt auf der Basis der Relativgeschwindigkeit und des Abstands zum vorausfahrenden Fahrzeug eine Grenzzeit, die erforderlich ist, bis das Fahrzeug auf das vorausfahrende Fahrzeug aufprallt, um durch Betätigung einer Alarmvorrichtung dem Fahrer des Fahrzeugs ein Alarmsignal zu geben, wenn bei nicht getretenem Bremspedal die Grenzzeit kürzer als ein vorgegebener Grenzzeitschwellenwert wird. Tritt der Fahrer des Fahrzeugs auf die Abgabe des Alarmsignals hin nicht das Bremspedal, so wird nach Ablauf eines fest oder variabel vorgegebenen Zeitintervalls ein automatischer Bremsvorgang durchgeführt, um die Fahrzeuggeschwindigkeit zur Vermeidung eines Aufpralls auf das vorausfahrende Fahrzeug soweit zu verringern, bis die Grenzzeit wieder größer als der vorgegebene Grenzzeitschwellenwert ist.

Aufgrund der Art und Weise, in der die Einstellung des vorgegebenen Grenzzeitschwellenwerts durch das Bremssystem erfolgt, besteht die Möglichkeit, dass der vorgegebene Grenzzeitschwellenwert zu kurz ist, um mittels Durchführung des automatischen Bremsvorgangs einen Aufprall auf das vorausfahrende Fahrzeug vermeiden zu können. In diesem Fall ist die ausschließliche Betrachtung der Grenzzeit bis zum Aufprall nicht ausreichend, und das Bremssystem bestimmt zusätzlich auf Basis der Fahrzeuggeschwindigkeit und des Reibungskoeffizienten zwischen der Straßenoberfläche und den Fahrzeugreifen einen Anhalteweg, der zum Anhalten des Fahrzeugs erforderlich ist. Ist die Grenzzeit größer als der vorgegebene Grenzzeitschwellenwert, der Abstand zwischen Fahrzeug und vorausfahrendem Fahrzeug aber kleiner als der bestimmte Anhalteweg, so wird ebenfalls nach Abgabe des Alarmsignals der automatische Bremsvorgang des Fahrzeugs durchgeführt, und zwar solange, bis der Abstand wieder größer als der aktuell bestimmte Anhalteweg ist.

Sowohl bei der Bestimmung der Grenzzeit als auch bei der Bestimmung des Anhaltewegs ist es nachteilig, dass die Betrachtung der Fahr- bzw. Verkehrssituation nur in vereinfachter Weise erfasst wird. In komplexen Verkehrssituationen wird daher unter Umständen eine Aufprallgefahr auf das vorausfahrende Fahrzeug nicht erkannt oder falsch eingeschätzt, sodass die Abgabe des Alarmsignals und damit gegebenenfalls die Durchführung des automatischen Bremsvorgangs zu früh, zu spät, überhaupt nicht oder in unnötiger Weise erfolgt.

Es ist daher die Aufgabe der vorliegenden Erfindung, ein Verfahren bzw. eine Vorrichtung der eingangs genannten Art zu schaffen, bei dem bzw. bei der in komplexen Verkehrssituationen die Wahrscheinlichkeit einer Fehlauslösung des Fahreralarms und damit des selbsttätigen Notbremsvorgangs verringert wird.

Diese Aufgabe wird durch die Merkmale des Patentanspruchs 1 bzw. des Patentanspruchs 22 gelöst.

Die Fahrerwarnung wird ausgelöst, wenn eine vorgegebene Warnbedingung erfüllt ist, wobei die Erfüllung der Warnbedingung angibt, dass aufgrund der momentanen Fahrsituation des Fahrzeugs und einer vorgegebenen Notbremsverzögerung bei Ablauf einer vorgegebenen Warnzeitdauer zur Vermeidung eines Auffahrens des Fahrzeugs auf das vorausfahrende Fahrzeug bzw. zur Verminderung der Unfallfolgen, wenn ein Auffahren unvermeidbar ist, der selbsttätige Notbremsvorgang auszulösen ist, mit dem Ziel, mit Beendigung des selbsttätigen Notbremsvorgangs eine vorgegebene Zielrelativgeschwindigkeit und einen vorgegebenen Zielsicherheitsabstand zwischen Fahrzeug und vorausfahrendem Fahrzeug zu erreichen. Durch geeignete Vorgabe der Zielrelativgeschwindigkeit und des Zielsicherheitsabstands kann unter anderem erreicht werden, dass die Auslösung des Fahreralarms und damit die Auslösung des selbsttätigen Notbremsvorgangs nicht früher erfolgt, als zur Vermeidung eines Auffahrens auf das vorausfahrende Fahrzeug notwendig ist. Die momentane Fahrsituation ergibt sich hierbei zumindest aus der ermittelten Beschleunigung des Fahrzeugs und der ermittelten Relativbeschleunigung zwischen Fahrzeug und vorausfahrendem Fahrzeug. Durch Einbeziehung dieser Größen ist es möglich, dass die Gefahr eines Auffahrens des Fahrzeugs auf das vorausfahrende Fahrzeug bei einer Vielzahl von komplexen Verkehrssituationen zuverlässig erkannt bzw. korrekt eingeschätzt wird. Der Einsatz des erfindungsgemäßen Verfahrens bzw. der erfindungsgemäßen Vorrichtung bietet sich insbesondere in Zusammenhang mit Lastkraftwagen an, da gerade hier aufgrund der hohen Fahrzeugmassen ein Auffahren auf das vorausfahrende Fahrzeug in der Regel schwerwiegende Folgen hat. Es wird nicht nur eine Auffahrgefahr auf ein vorausfahrendes Fahrzeug, sondern natürlich auch auf jedes andere bewegliche oder feste Hindernis erkannt.

Vorteilhafte Ausführungen des erfindungsgemäßen Verfahrens gehen aus den Unteransprüchen hervor.

Vorteilhafterweise erfolgt die Fahrerwarnung in für den Fahrer des Fahrzeugs optisch und/oder akustisch und/oder haptisch wahrnehmbarer Weise. So ist es möglich, den Fahrer unmissverständlich darauf aufmerksam zu machen, dass die Gefahr des Auffahrens auf das vorausfahrende Fahrzeug besteht und daher bei Ablauf der vorgegebenen Warnzeitdauer der selbsttätige Notbremsvorgang ausgelöst wird.

Um den selbsttätigen Notbremsvorgang sicherer zu gestalten, kann dem Fahrzeug bereits vor dessen Auslösung kinetische Energie entzogen werden, indem eine haptisch für den Fahrer des Fahrzeugs wahrnehmbare Fahrerwarnung in Form eines Teilbremsvorgangs des Fahrzeugs mit einer vorgebenenen Teilbremsverzögerung erfolgt. Die vorgegebene Teilbremsverzögerung ist hierbei kleiner als die vorgebenene Notbremsverzögerung.

Weiterhin besteht die Möglichkeit, den selbsttätigen Notbremsvorgang nur dann auszulösen, wenn eine gegebene Notbremsbedingung erfüllt wird und die vorgegebene Warnzeitdauer abgelaufen ist. So kann nochmals die Notwendigkeit des selbsttätigen Notbremsvorgangs vor dessen Auslösung überprüft werden.

Die Notbremsverzögerung oder eine damit zusammenhängende Größe, wie der Notbremsdruck, die Notbremskraft oder das Notbremsmoment, kann entweder fest oder aber einstellbar vorgegeben werden. In letzterem Fall besteht die Möglichkeit, in Abhängigkeit von Größen, die beispielsweise die Fahrzeugmasse, den Belagreibwert der Radbremseinrichtungen des Fahrzeugs, die Fahrbahnbeschaffenheit oder die Sichtverhältnisse beschreiben, beispielsweise eine tatsächlich erreichbare Maximalbremsverzögerung zu ermitteln und den Wert der vorgegebenen Notbremsverzögerung entsprechend der ermittelten tasächlich erreichbaren Maximalbremsverzögerung einzustellen. Einfacherweise kann der Wert der Notbremsverzögerung auch fest vorgegeben werden, wobei in diesem Fall vorzugsweise von einer durchschnittlich erreichbaren Maximalbremsverzögerung ausgegegangen wird, deren Wert typischerweise im Bereich zwischen 5 m/s$^2$ und 7 m/s$^2$ liegt.

Entsprechendes gilt für die Vorgabe der Warnzeitdauer, die ebenfalls fest oder einstellbar erfolgen kann. Eine fest vorgegebene Warnzeitdauer hat den Vorteil, dass dem Fahrer der Zeitpunkt der Auslösung des selbsttätigen Notbremsvorgangs bekannt ist und dieser nicht unerwartet bzw. unvorhersehbar eintrifft. Ein geeigneter Wert der vorgegebenen Warnzeitdauer kann aufgrund von Fahrversuchen ermittelt werden. Dieser liegt typischerweise im Bereich zwischen 1,7 und 2,3 Sekunden. Andererseits ist es denkbar, den Wert der vorgegebenen Warnzeitdauer in Abhängigkeit von Größen, die beispielsweise die Fahrzeugmasse, den Belagreibwert der Radbremseinrichtungen des Fahrzeugs, die Fahrbahnbeschaffenheit oder die Sichtverhältnisse beschreiben, einzustellen. Hierbei wird vorzugsweise ein Mindestwert der Warnzeitdauer vorgegeben, der nicht unterschritten werden soll, damit dem Fahrer grundsätzlich ausreichend Zeit bleibt, sich auf die Auslösung des selbsttätigen Notbremsvorgangs vorzubereiten oder vorher noch selbst einzugreifen.

Auch die Zielrelativgeschwindigkeit kann entweder fest oder aber einstellbar vorgegeben werden. Hierbei ist es von Vorteil, wenn der Wert einer fest vorgegebenen Zielrelativgeschwindigkeit in etwa Null beträgt. In diesem Fall wird die Eigengeschwindigkeit des Fahrzeugs durch den selbsttätigen Notbremsvorgang nur soweit wie unbedingt nötig verringert, um ein Auffahren des Fahrzeugs auf das vorausfahrende Fahrzeug zuverlässig zu verhindern. Jede darüber hinausgehende Verringerung der Eigengeschwindigkeit ist unnötig und stellt insbesondere für nachfolgende Fahrzeuge eine zusätzliche Gefahr dar.

Ferner kann auch der Zielsicherheitsabstand fest oder einstellbar vorgegeben werden. Eine Einstellung des Werts des Zielsicherheitsabstands kann entweder in Abhängigkeit von Größen, die beispielsweise die Fahrzeugmasse, den Bremsbelagreibwert der Radbremseinrichtungen des Fahrzeugs, die Fahrbahnbeschaffenheit, die Fahrzeuggeschwindigkeit oder die Sichtverhältnisse beschreiben, oder aber manuell durch den Fahrer des Fahrzeugs erfolgen. Hierbei ist vorzugsweise ein Mindestwert für den Zielsicherheitsabstand vorgegeben, sodass ein allzu dichtes Auffahren auf das vorausfahrende Fahrzeug mit Beendigung des selbsttätigen Notbremsvorgangs verhindert wird. Der Einfachheit halber kann die Vorgabe des Werts des Zielsicherheitsabstands auch fest vorgegeben werden, typischerweise liegt dieser dann zwischen Null und einigen Metern.

Vorteilhafterweise unterbleibt bei Vorliegen von Fahreraktivität und/oder bei Verringerung der Auffahrgefahr die Auslösung einer Fahrerwarnung und/oder die Intensität der Fahrerwarnung wird angepasst. Auf diese Weise wird vermieden, dass der Fahrer des Fahrzeugs unnötig ausgelöste Fahrerwarnungen als störend empfindet und die erfindungsgemäße Vorrichtung auf Dauer abschaltet, sodass das erfindungsgemäße Verfahren nicht durchgeführt wird.

Weiterhin kann bei Vorliegen von Fahreraktivität und/oder bei Verringerung der Auffahrgefahr eine bereits ausgelöste Fahrerwarnung beendet und/oder verändert werden und/oder die Auslösung des selbsttätigen Notbremsvorgangs unterbleiben. Zum einen wird dem Fahrer des Fahrzeugs solange wie möglich die Gelegenheit gegeben, geeignete Gegenmaßnahmen zur Vermeidung des Auffahrens auf das vorausfahrende Fahrzeug zu treffen, und zum anderen wird eine zwischenzeitlich unnötig gewordene Fahrerwarnung nicht weiter aufrechterhalten und/oder ein zwischenzeitlich unnötig gewordener selbsttätiger Notbremsvorgang garnicht erst ausgelöst.

Es ist möglich, den selbsttätigen Notbremsvorgang automatisch bei Ablauf der vorgegebenen Warnzeitdauer auszulösen, sofern die Fahrerwarnung nicht während der vorgegebenen Warnzeitdauer abgebrochen wird. In diesem Fall ist dem Fahrer des Fahrzeugs der Zeitpunkt der Auslösung des selbsttätigen Notbremsvorgangs bekannt, und er hat Gelegenheit, geeignete Gegenmaßnahmen zur Vermeidung des Auffahrens auf das vorausfahrende Fahrzeug zu treffen.

Um den Erfolg eines bereits ausgelösten selbsttätigen Notbremsvorgangs nicht durch einen vorzeitigen Abbruch von Seiten des Fahrers zu gefährden, wird dieser erst dann abgebrochen, wenn eine ermittelte Notbremszeitdauer abgelaufen ist und/oder wenn die vorgegebene Zielrelativgeschwindigkeit und der vorgegebene Zielsicherheitsabstand erreicht sind. Die Notbremszeitdauer hängt ab von der momentanen Fahrsituation beim Auslösen des selbsttätigen Notbremsvorgangs, der vorgegebenen Notbremsverzögerung, der Zielrelativgeschwindigkeit und dem Zielsicherheitsabstand.

Vorteilhafterweise besteht die Fahrerwarnung aus wenigstens zwei Warnstufen, die innerhalb der vorgegebenen Warnzeitdauer der Fahrerwarnung zeitlich nacheinander ausgelöst werden, wobei jeder Warnstufe eine vorgegebene Warnstufenzeitdauer zugeordnet ist. Somit ist es möglich, die Fahrerwarnung durch Verwendung unterschiedlich dringlicher Warnstufen aufzubauen, wobei die Dringlichkeit der Warnstufen mit Abnahme der bis zur Auslösung des selbsttätigen Notbremsvorgangs verbleibenden Zeit zunehmen kann, sodass der Fahrer auf die kürzer werdende Zeitspanne bis zur Auslösung des selbsttätigen Notbremsvorgangs hingewiesen wird.

Die Warnstufenzeitdauer einer Warnstufe kann fest oder aber einstellbar vorgegeben sein. Eine fest vorgegebene Warnstufenzeitdauer hat den Vorteil, dass dem Fahrer der Zeitpunkt der Auslösung einer gegebenenfalls nachfolgenden Warnstufe und/oder des selbsttätigen Notbremsvorgangs bekannt ist und dieser nicht unerwartet bzw. unvorhersehbar eintrifft. Daneben besteht die Möglichkeit, den Wert der Warnstufenzeitdauer einer Warnstufe in Abhängigkeit von Größen einzustellen, die beispielsweise die Fahrzeugmasse, den Bremsbelagreibwert der Radbremseinrichtungen des Fahrzeugs, die Sichtverhältnisse oder die Fahrbahnbeschaffenheit beschreiben. So kann beispielsweise die letzte und damit in der Regel dringlichste Warnstufe umso früher ausgelöst werden, je ungünstiger die Verhältnisse zur Vermeidung des Auffahrens durch Auslösung des selbsttätigen Notbremsvorgangs sind.

Weiterhin besteht die Möglichkeit, nach Auslösung einer ersten Warnstufe nur dann wenigstens eine weitere Warnstufe auszulösen, wenn eine der weiteren Warnstufe jeweils zugeordnete, vorgegebene Warnbedingung erfüllt ist. So lässt sich die Notwendigkeit der Auslösung jeder weiteren Warnstufe überprüfen und die Auslösung unnötiger, der tatsächlichen Auffahrgefahr unangemessener Warnstufen vermeiden.

Bei Vorliegen von Fahreraktivität und/oder bei Verringerung der Auffahrgefahr kann wenigstens eine der bereits ausgelösten Warnstufen beendet werden und/oder die Auslösung weiterer Warnstufen unterbleiben. So wird vermieden, dass der Fahrer des Fahrzeugs unnötig ausgelöste Warnstufen als störend empfindet und die erfindungsgemäße Vorrichtung deaktiviert. Hierbei ist es auch möglich, eine bereits ausgelöste Warnstufe, die beispielweise in Form einer optischen Fahrerwarnung vorliegt, bis zum Ablauf der vorgegebenen Warnzeitdauer aufrechtzuerhalten und lediglich weitere Warnstufen nicht auszulösen, um den Fahrer auf die potentiell bestehende Auffahrgefahr hinzuweisen.

Zweckmäßigerweise wird das Vorliegen von Fahreraktivität aufgrund einer Betätigung wenigstens eines der Bedienelemente des Fahrzeugs erkannt, wobei das Bedienelement insbesondere zur Änderung der Längs- oder Querdynamik des Fahrzeugs dient. Zu den Bedienelementen, die zur Erkennung der Fahreraktivität geeignet sind, zählen beispielsweise das Fahrpedal, das Bremspedal, das Kupplungspedal, das Lenkrad oder die Richtungsgeber des Fahrzeugs.

Eine Verringerung der Auffahrgefahr kann in einfacher Weise anhand eines mit der Zeit zunehmenden Abstands zwischen Fahrzeug und vorausfahrendem Fahrzeug und/oder einer mit der Zeit abnehmenden Relativgeschwindigkeit zwischen Fahrzeug und vorausfahrendem Fahrzeug erkannt werden.

Um die Gefahr eines Auffahrens des Fahrzeugs auf das vorausfahrende Fahrzeug auch in komplexen Verkehrsituationen zuverlässig erkennen bzw. korrekt einschätzen zu können, wird die momentane Fahrsituation des Fahrzeugs in Abhängigkeit des ermittelten Abstands zwischen Fahrzeug und vorausfahrendem Fahrzeug und/oder der ermittelten Geschwindigkeit des Fahrzeugs und/oder der ermittelten Relativbeschleunigung zwischen Fahrzeug und vorausfahrendem Fahrzeug und/oder der ermittelten Beschleunigung des Fahrzeugs und/oder der Fahrbahnneigung und/oder von Reibwerten zwischen der Fahrbahn und den Fahrzeugrädern bestimmt.

Damit die Gefahr möglicher Folgeunfälle verringert wird, kann bei Auslösung des selbsttätigen Notbremsvorgangs eine Warnung vorausfahrender und/oder hinterherfahrender Fahrzeuge erfolgen. Hierzu werden beispielsweise die Bremslichter, die Fahrzeughupe, die Warnblinker oder das Fahr- oder Fernlicht des Fahrzeugs betätigt.

Das erfindungsgemäße Verfahren bzw. die erfindungsgemäße Vorrichtung zur Auslösung eines selbsttätigen Notbremsvorgangs eines Fahrzeugs wird im folgenden anhand der Zeichnungen näher erläutert. Dabei zeigen:

Fig. 1    eine schematische Darstellung eines Ausführungsbeispiels einer Vorrichtung zur Durchführung des erfindungsgemäßen Verfahrens,

Fig. 2a    ein Ausführungsbeispiel des erfindungsgemäßen Verfahrens in Form eines Flussdiagramms,

Fig. 2b    eine alternatives Ausführungsbeispiel des erfindungsgemäßen Verfahrens,

Fig. 2c    ein weiteres alternatives Ausführungsbeispiel des erfindungsgemäßen Verfahrens und

Fig. 3    eine beispielhafte Darstellung des zeitlichen Ablaufs des erfindungsgemäßen Verfahrens.

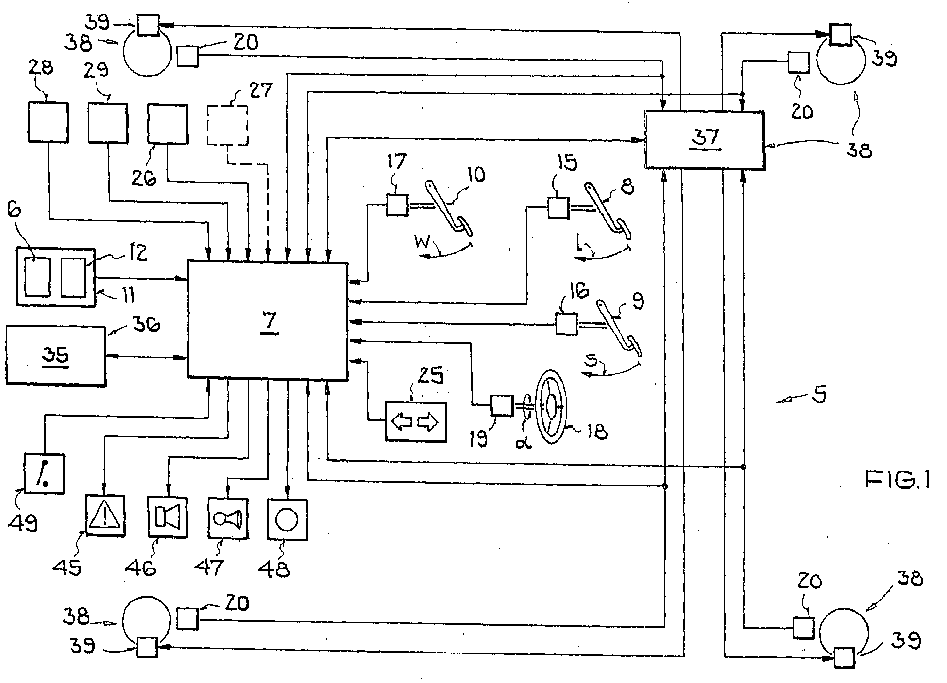

Fig. 1 zeigt eine Vorrichtung 5 zur Auslösung eines selbsttätigen Notbremsvorgangs eines Fahrzeugs. Diese stellt eine Assistenzfunktion zur Vermeidung des Auffahrens des Fahrzeugs auf ein vorausfahrendes Fahrzeug bereit, wobei zumindest die Auffahrfolgen vermindert werden, falls das Auffahren auf das vorausfahrende Fahrzeug unvermeidbar ist. Hierzu weist die Vorrichtung 5 eine Sensoreinheit 11 auf, mit einem Abstandssensor 6 zur Messung des Abstands d zwischen Fahrzeug und vorausfahrendem Fahrzeug und einem Relativgeschwindigkeitssensor 12 zur Messung der Relativgeschwindigkeit $v_{rel}$ zwischen Fahrzeug und vorausfahrendem Fahrzeug. Die entsprechenden Messsignale werden einer Auswerteeinheit 7 zugeführt. Um eine höhere Messgenauigkeit zu erreichen, können zur Messung des Abstands d und der Relativgeschwindigkeit $v_{rel}$ verschiedene, jeweils am besten geeignete physikalische Messverfahren verwendet werden. Als Abstandssensor 6 und/oder Relativgeschwindigkeitssensor 12 werden beispielsweise Radarsensoren verwendet.

Bei einem Fahrzeug mit manuellem Schaltgetriebe weist die Vorrichtung 5 ein Fahrpedal 8, ein Bremspedal 9 und ein Kupplungspedal 10 auf. Das Fahrpedal 8 wirkt mit einem Fahrpedalsensor 15 zusammen, der die Fahrpedalauslenkung 1 registriert und in ein entsprechendes Signal umwandelt. Ein Bremspedalsensor 16 erfasst die Bremspedalauslenkung s und erzeugt ein entsprechendes Signal. Die Signale werden der Auswerteeinheit 7 zugeführt. Eine Kupplungspedalauslenkung w des Kupplungspedals 10 wird durch einen mit der Auswerteeinheit 7 verbundenen Kupplungspedalgeber 17 erfasst. Bei einem Fahrzeug mit Automatikgetriebe oder automatisiertem Schaltgetriebe fehlen natürlich Kupplungspedal 10 und Kupplungspedalgeber 17. Weiterhin ist ein Lenkrad 18 vorhanden, das mit einem Lenkwinkelsensor 19 zusammenwirkt, der den am Lenkrad 18 eingestellten Lenkradwinkel α registriert und in ein entsprechendes Signal umwandelt. Die Drehzahlen der nicht dargestellten Fahrzeugräder werden mittels Raddrehzahlsensoren 20 erfasst. Die Signale des Lenkwinkelsensors 19 und der Raddrehzahlsensoren 20 werden ebenfalls der Auswerteeinheit 7 zugeführt.

Zusätzlich wird von der Auswerteeinheit 7 neben einer Betätigung des Richtungsgebers 25 die Fahrzeugmasse, der Bremsbelagreibwert der Radbremseinrichtungen des Fahrzeugs, die Sichtverhältnisse und die Fahrbahnbeschaffenheit berücksichtigt. Die Fahrzeugmasse ergibt sich aus der Summe der Fahrzeugleermasse und der zugeladenen und/oder angehängten Masse. Die Bestimmung der Fahrzeugmasse erfolgt entweder selbsttätig durch eine mit der Auswerteeinheit 7 verbundene Massebestimmungseinheit 26, beispielsweise nach Art der in DE 38 43 818 C1 veröffentlichten Vorrichtung, oder aber alternativ mittels manueller Eingabe durch den Fahrer über eine Masseeingabeeinheit 27. Die Berücksichtigung des Bremsbelagreibwerts der Radbremseinrichtungen erfolgt beispielsweise gemäß des in DE 199 11 902 C1 dargestellten Verfahrens, das vorzugsweise durch die Auswerteeinheit 7 mitausgeführt wird. Zur Bestimmung der umgebenden Sichtverhältnisse und der Fahrbahnbeschaffenheit sind entsprechende Sensoren 28, 29 vorhanden.

Die Auswerteeinheit 7 steuert ihrerseits nach Auswertung der auf sie geführten Signale eine Antriebsmittelsteuerung 35 der Antriebsmittel 36, eine Bremsmittelsteuerung 37 der Bremsmittel 38 und damit der Radbremseinrichtungen 39 des Fahrzeugs, eine optische Warneinrichtung 45, eine akustische Warneinrichtung 46, die Fahrzeughupe 47 und Leuchteinrichtungen 48 des Fahrzeugs an. Die Antriebsmittel 36 des Fahrzeugs sind lediglich durch die Antriebsmittelsteuerung 35 vertreten, der Übersichtlichkeit ist der neben der Antriebsmittelsteuerung 35 ebenfalls zu den Antriebsmitteln 36 gehörende Antriebsstrang, der Motor, Getriebe, etc. umfasst, nicht gezeigt. Zu den Leuchteinrichtungen 48 gehören beispielsweise die Warnblinker, die Bremslichter oder das Fahr- und Fernlicht des Fahrzeugs.

Die Assistenzfunktion wird zur Durchführung des erfindungsgemäßen Verfahrens über einen mit der Auswerteeinheit 7 verbundenen Schalter 49 aktiviert und deaktiviert. Der Schalter 49 ist beispielsweise Teil einer Bedienoberfläche einer im Fahrzeug bereits vorhandenen Kombimenüeinheit.

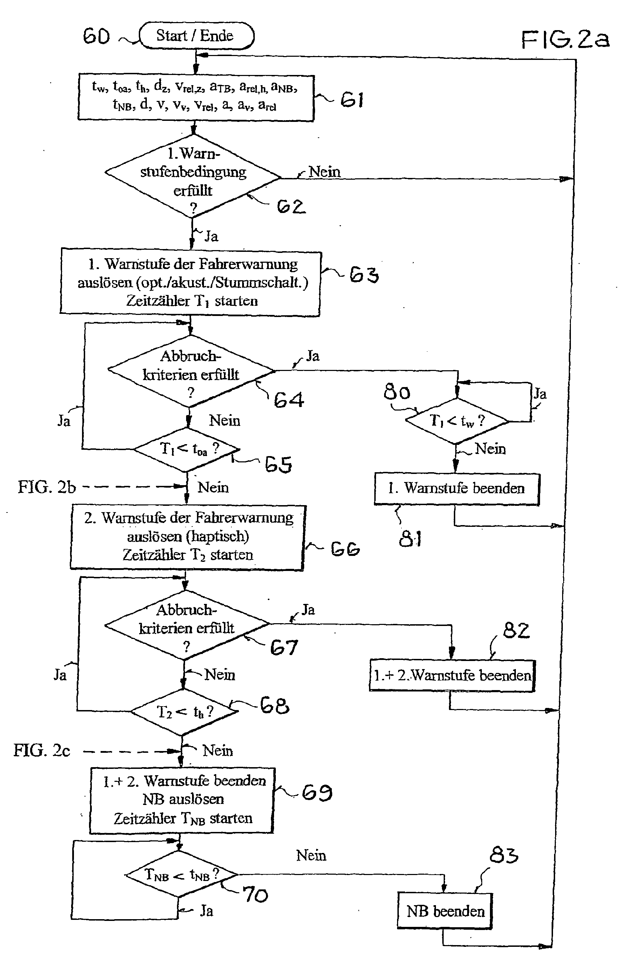

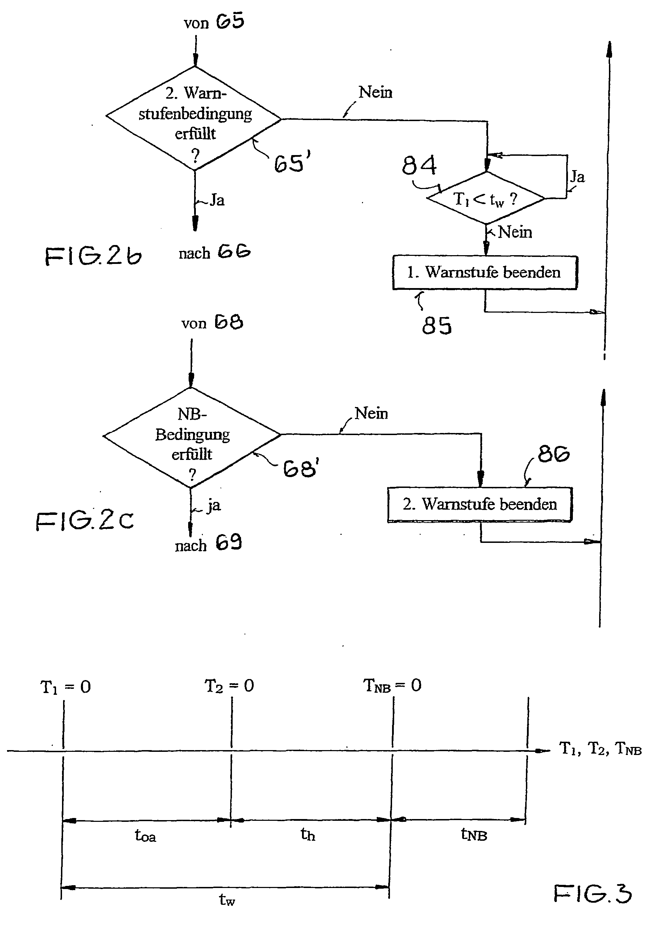

Fig. 2 zeigt ein Ausführungsbeispiel des erfindungsgemäßen Verfahrens in Form eines Flussdiagramms. Bevor hierauf näher eingegangen wird, werden zum besseren Verständnis zunächst einige Grundlagen näher erläutert.

Für die von einem Fahrzeug zum Zeitpunkt t zurückgelegte Strecke s(t) gilt

$$s(t) = s(0) + \int_0^t v(t)dt \; , \qquad\qquad (1)$$

wobei sich die Geschwindigkeit v(t) zum Zeitpunkt t aus

$$v(t) = v(0) + \int_0^t a(t)dt \qquad (2)$$

ergibt. s(0) ist die vom Fahrzeug zum Zeitpunkt t = 0 zurückgelegte Strecke, dementsprechend ist v(0) die Geschwindigkeit und a(0) die Beschleunigung des Fahrzeugs zum Zeitpunkt t = 0. Daraus folgt

$$s(t) = s(0) + \int_0^t v(0)dt + \int_0^t \int_0^t a(t)dtdt \quad , \qquad (3)$$

woraus sich wegen v(0) = konst. die Beziehung

$$s(t) = s(0) + v(0)dt + \int_0^t \int_0^t a(t)dtdt \qquad (4)$$

ergibt. Weiterhin wird angenommen, dass die Beschleunigung a(t) des Fahrzeugs zu jedem Zeitpunkt t den konstanten Wert a(0) besitzt. In diesem Fall ergibt sich

$$s(t) = s(0) + v(0)dt + \frac{1}{2} a(0)t^2 \quad , \qquad (5)$$

bzw. aus Gleichung (2)

$$v(t) = v(0) + a(0)t \quad . \qquad (6)$$

Dem Fahrzeug soll nun ein weiteres Fahrzeug vorausfahren, wobei das vorausfahrende Fahrzeug nachfolgend mit dem Index "v" gekennzeichnet wird. Die Relativgeschwindigkeit $v_{rel}(t)$ zwischen Fahrzeug und vorausfahrendem Fahrzeug zum Zeitpunkt t wird durch

$$v_{rel}(t) = v(t) - v_v(t) \qquad (7)$$

definiert. Die Relativgeschwindigkeit $v_{rel}(t)$ ist also positiv, wenn sich das Fahrzeug an das vorausfahrende Fahrzeug annähert. Mit Gleichung (6) ergibt sich

$$v_{rel}(t) = v_{rel}(0) + a_{rel}(0)t \quad . \qquad (8)$$

In entsprechender Weise wird eine Relativbeschleunigung $a_{rel}(t)$ zwischen Fahrzeug und vorausfahrendem Fahrzeug zum Zeitpunkt t definiert,

$$a_{rel}(t) = a(t) - a_v(t) \quad . \qquad (9)$$

Der Abstand d(t) zwischen Fahrzeug und vorausfahrendem Fahrzeug zum Zeitpunkt t ergibt sich aus

$$d(t) = d(0) - s(t) + s_v(t) \quad ,$$

woraus aufgrund der Gleichungen (5) und (8) die Beziehung

$$d(t) = d(0) - v_{rel}(0)t - \frac{1}{2} a_{rel}(0)t^2 \qquad (10)$$

folgt.

Im folgenden sei mit $t_{tc}$ diejenige Zeit bezeichnet, die vergehen muss, bis es zum Auffahren des Fahrzeugs auf das vorausfahrende Fahrzeug kommt ("time-to-crash").

Weiterhin wird vereinfachend angenommen, dass die Beschleunigungen von Fahrzeug und vorausfahrendem Fahrzeug zeitlich konstant sind. Aufgrund dieser Vereinfachung sind bei der Bestimmung der Zeit $t_{tc}$ zwei Fälle zu unterscheiden:

- Im ersten Fall fährt das Fahrzeug auf das noch fahrende vorausfahrende Fahrzeug auf.
- Im zweiten Fall kommt das vorausfahrende Fahrzeug noch vor dem Auffahren des Fahrzeugs auf das vorausfahrende Fahrzeug zum Stillstand.

Im zweiten Fall würde aufgrund der als zeitlich konstant angenommenen Beschleunigungen das vorausfahrende Fahrzeug seine Bewegungsrichung umkehren, nachdem es zum Stillstand gekommen ist. In der Realität ist das natürlich nicht der Fall. In diesem Fall wäre eine unnötig frühe Auslösung eines selbsttätigen Notbremsvorgangs die Folge. Um dies zu vermeiden, müssen der erste und der zweite Fall getrennt behandelt werden, wobei im zweiten Fall die Beschleunigung $a_v$ des vorausfahrenden Fahrzeugs ab dessen Stillstandszeitpunkt Null beträgt.

Generell erfolgt ein Auffahren auf das vorausfahrende Fahrzeug, wenn der Abstand d(t) zwischen Fahrzeug und vorausfahrendem Fahrzeug zu Null wird.

Im ersten Fall ergibt sich daher die Zeit $t_{tc}$ bis zum Auffahren auf das vorausfahrende Fahrzeug wegen Gleichung (10) zu

$$a_{rel}(0)t_{tc}^2 + 2v_{rel}(0)t_{tc} - 2d(0) = 0 \quad . \qquad (11)$$

Ist $a_{rel}(0) = 0$, aber $v_{rel}(0) \neq 0$, so gilt außerdem

$$t_{tc} = \frac{d(0)}{v_{rel}(0)} \quad . \qquad (12)$$

Damit ist

$$\begin{cases} t_{tc} > 0 \; , \quad \text{falls} \quad v_{rel}(0) > 0 \\ t_{tc} < 0 \; , \quad \text{falls} \quad v_{rel}(0) < 0 \quad . \end{cases} \qquad (13)$$

Die Lösung der quadratischen Gleichung (11) lautet

$$(t_{tc})_{1,2} = -\frac{v_{rel}(0)}{a_{rel}(0)} \pm \sqrt{\frac{v_{rel}^2(0)}{a_{rel}^2(0)} + \frac{2d(0)}{a_{rel}(0)}} \quad . \tag{14}$$

Im zweiten Fall ist die Zeit $t_{still,v}$ bis zum Stillstand des vorausfahrenden Fahrzeugs entsprechend Gleichung (6) für $V_v(0) \geq 0$ durch

$$t_{still,v} = \begin{cases} -\frac{v_v(0)}{a_v(0)} , & \text{falls } a_v(0) < 0 \\ \infty , & \text{falls } a_v(0) \geq 0 \end{cases} \tag{15}$$

gegeben. Für den Abstand $d(t)$ zwischen Fahrzeug und vorausfahrendem Fahrzeug zum Zeitpunkt $t_{still,v}$ gilt damit nach Gleichung (10)

$$d(t_{still,v}) = d(0) + v_{rel}(0) \frac{v_v(0)}{a_v(0)} - \frac{1}{2} a_{rel}(0) (\frac{v_v(0)}{a_v(0)})^2 \quad . \tag{16}$$

Für den Abstand $d(t)$ zwischen Fahrzeug und vorausfahrendem Fahrzeug zu einem beliebigen Zeitpunkt $t \geq t_{still,v}$ gilt

$$d(t) = d(t_{still,v}) - v(t_{still,v}) (t - t_{still,v}) - \frac{1}{2} a(t_{still,v}) (t - t_{still,v})^2 \quad . \tag{17}$$

Gemäß Gleichung (6) ist

$$v(t_{still,v}) = v(0) + a(0)t_{still,v} \overset{(15)}{=} v(0) - a(0) \frac{v_v(0)}{a_v(0)} \quad . \tag{18}$$

Weiterhin gilt aufgrund der getroffenen Annahme konstanter Beschleunigungen

$$a(t_{still,v}) = a \quad , \tag{19}$$

und damit

$$d(t) = d(t_{still,v}) - (v(0) - a(0) \frac{v_v(0)}{a_v(0)}) (t - t_{still,v})$$
$$- \frac{1}{2} a(0) (t - t_{still,v})^2 \quad . \tag{20}$$

Ein Auffahren auf das vorausfahrende Fahrzeug erfolgt, wenn der Abstand $d(t)$ zwischen Fahrzeug und vorausfahrendem Fahrzeug zu Null wird. Damit bestimmt sich die Zeit $t_{tc}$ - $t_{still,v}$ zwischen Stillstand des vorausfahrenden Fahrzeugs und dem Auffahren des Fahrzeugs auf das vorausfahrende Fahrzeug zu

$$a(0) \, (t_{tc} - t_{still,v})^2 + 2(v(0) - a(0) \frac{v_v(0)}{a_v(0)}) \, (t_{tc} - t_{still,v}) \qquad (21)$$

$$- \, 2d(t_{still,v}) = 0 \; .$$

Ein selbsttätiger Notbremsvorgang zur Vermeidung eines Auffahrens des Fahrzeugs auf das vorausfahrende Fahrzeug ist auszulösen, wenn der Abstand d(0), die Relativgeschwindigkeit $v_{rel}(0)$, die Beschleunigung a(0) des Fahrzeugs und die Beschleunigung $a_v(0)$ des vorausfahrenden Fahrzeugs in einem bestimmten Zusammenhang zueinander stehen. Um diesen Zusammenhang zu ermitteln, wird in einem ersten Schritt die zur Vermeidung eines Auffahrens erforderliche Notbremsverzögerung $a_{NB}$ bestimmt. Der selbsttätige Notbremsvorgang erfolgt mit dem Ziel, mit seiner Beendigung eine vorgegebene Zielrelativgeschwindigkeit $v_{rel,z} = 0$ und einen vorgegebenen Zielsicherheitsabstand $d_z$ zwischen Fahrzeug und vorausfahrendem Fahrzeug zu erreichen. Der Zielsicherheitsabstand $d_z$ kann hierbei gleich Null sein, wird aber in der Regel der Sicherheit wegen größer als Null angesetzt, beispielsweise in der Größenordnung einiger Meter.

Im ersten Fall behält das vorausfahrende Fahrzeug aufgrund der vereinfachenden Annahme konstanter Beschleunigungen seine Beschleunigung a auch nach Beendigung des selbsttätigen Notbremsvorgangs bei. Die Notbremszeitdauer $t_{NB}$ ist wegen Gleichung (8) gegeben durch

$$t_{NB} = - \frac{v_{rel}(0)}{a_{rel,NB}} \quad , \qquad (22)$$

mit der relativen Notbremsverzögerung

$$a_{rel,NB} = a_{NB} - a_v(0) \quad . \qquad (23)$$

Für den Abstand d(t), der sich bei Beendigung des selbsttätigen Notbremsvorgangs ergibt, gilt nach Gleichung (10)

$$d(t_{NB}) = d(0) + \frac{1}{2} \frac{v_{rel}^2(0)}{a_{rel,NB}} \quad . \qquad (24)$$

Gleichsetzen mit $d_z$ ergibt für die erforderliche Notbremsverzögerung $a_{NB}$

$$a_{NB} = a_v(0) - \frac{v_{rel}^2(0)}{2(d(0) - d_z)} \quad . \qquad (25)$$

Erfindungsgemäß ist die Notbremsverzögerung $a_{NB}$ vorgegeben. In diesem Fall lässt sich Gleichung (25) durch Umformung übersichtlicher darstellen,

$$2(a_{NB} - a_v(0)) \, (d(0) - d_z) = -v_{rel}^2(0) \quad . \qquad (26)$$

Es ist also im ersten Fall ein selbsttätiger Notbremsvorgang auszulösen, wenn der in Gleichung (25) oder (26) beschriebene Zusammenhang erfüllt ist.

Im zweiten Fall kommt das vorausfahrende Fahrzeug noch vor Beendigung des selbsttätigen Notbremsvorgangs zum Stillstand. Für den Abstand d(t) zwischen Fahrzeug und vorausfahrendem Fahrzeug gilt aufgrund der Gleichungen (12) und (17) für beliebige Zeiten $t > t_{still,v}$

$$d(t) = d(0) + v_{rel}(0) \frac{v_v(0)}{a_v(0)} - \frac{1}{2} a_{rel,NB} (\frac{v_v(0)}{a_v(0)})^2$$

$$- v(t_{still,v})(t - t_{still,v}) - \frac{1}{2} a_{NB}(t - t_{still,v})^2 .$$

$$(27)$$

Die Zeitdauer nach Stillstand des vorausfahrenden Fahrzeugs bis zur Beendigung des selbsttätigen Notbremsvorgangs ist wegen Gleichung (18) durch

$$t - t_{still,v} = - \frac{v(0) - a_{NB} \frac{v_v(0)}{a_v(0)}}{a_{NB}} \qquad (28)$$

gegeben. Damit und mit Gleichung (27) ergibt sich

$$d(t) = d(0) + v_{rel}(0) \frac{v_v(0)}{a_v(0)} - \frac{1}{2} a_{rel,NB} (\frac{v_v(0)}{a_v(0)})^2 + \frac{(v(0) - a_{NB} \frac{v_v(0)}{a_v(0)})^2}{2a_{NB}} .$$

$$(29)$$

Durch Ausmultiplizieren folgt daraus

$$d(t) = d(0) + v_{rel}(0) \frac{v_v(0)}{a_v(0)} + \frac{v^2(0)}{2a_{NB}} - v(0) \frac{v_v(0)}{a_v(0)} + \frac{v_v^2(0)}{2a_v(0)} , \qquad (30)$$

und mit Gleichung (7) schließlich

$$d(t) = d(0) - \frac{v_v^2(0)}{2a_v(0)} + \frac{v^2(0)}{2a_{NB}} . \qquad (31)$$

Die erforderliche Notbremsverzögerung $a_{NB}$ ist hier also

$$a_{NB} = \frac{v^2(0)}{\frac{v_v^2(0)}{a_v(0)} - 2(d(0) - d_z)} . \qquad (32)$$

Ist die Notbremsverzögerung $a_{NB}$ vorgegeben, lässt sich Gleichung (32) durch Umformung übersichtlicher darstellen,

$$a_{NB}(v_v^2(0) - 2a_v(0)(d(0) - d_z)) = a_v(0)v^2(0) \quad . \tag{33}$$

Es ist also im zweiten Fall ein selbsttätiger Notbremsvorgang auszulösen, wenn der in Gleichung (32) oder (33) beschriebene Zusammenhang erfüllt ist.

Eine beim Ausführungsbeispiel fest vorgegebene Warnzeitdauer $t_w$ vor Auslösung des selbsttätigen Notbremsvorgangs soll eine Auslösung einer Fahrerwarnung erfolgen. Für die Relativgeschwindigkeit $v_{rel}(0)$ und den Abstand d (0) zum Zeitpunkt der Auslösung der Fahrerwarnung gilt

$$v_{rel}(0) = v_{rel,NB} - a_{rel}(0)t_w \quad , \tag{34}$$

$$d(0) = d_{NB} + t_w v_{rel}(0) + \frac{1}{2} t_w^2 a_{rel}(0) \quad . \tag{35}$$

Hierbei bezeichnen $d_{NB}$ bzw. $V_{rel,NB}$ den Abstand bzw. die Relativgeschwindigkeit zwischen Fahrzeug und vorausfahrendem Fahrzeug zum Zeitpunkt der Auslösung des selbsttätigen Notbremsvorgangs. Werden die Gleichungen (34) und (35) in Gleichung (26) eingesetzt, so ergibt sich im ersten Fall

$$-2(a_{NB} - a_v(0))(d(0) - d_z - t_w v_{rel}(0) - \frac{1}{2} t_w^2 a_{rel}(0))$$
$$= (v_{rel}(0) + a_{rel}(0)t_w)^2 \quad , \tag{36}$$

wobei in Gleichung (26) d(0) durch $d_{NB}$ und $V_{rel}(0)$ durch $V_{rel,NB}$ ersetzt wurde. Daraus folgt

$$a_{rel}(0)(a_{NB} - a(0))t_w^2 + 2v_{rel}(0)(a_{NB} - a(0))t_w$$
$$- 2a_{rel,NB}(d(0) - d_z) - v_{rel}^2(0) = 0 \quad . \tag{37}$$

Die Auslösung der Fahrerwarnung erfolgt im ersten Fall, wenn der in Gleichung (37) beschriebene Zusammenhang erfüllt ist.

Weiterhin gilt für die Geschwindigkeiten von Fahrzeug und vorausfahrendem Fahrzeug

$$v(0) = v_{NB} - a(0)t_w \quad , \tag{38}$$

$$v_v(0) = v_{v,NB} - a_v(0)t_w \quad , \tag{39}$$

wobei $V_{NB}$ bzw. $V_{v,NB}$ die Geschwindigkeit des Fahrzeugs bzw. die des vorausfahrenden Fahrzeugs zum Zeitpunkt der Auslösung des selbsttätigen Notbremsvorgangs ist.

Werden die Gleichungen (38) und (39) in Gleichung (33) eingesetzt, so ergibt sich im zweiten Fall

$$a_{NB}(0) \, (v_v(0) + a_v(0)t_w)^2 - 2a_{NB}a_v(0) \, (d(0) - t_w v_{rel}(0) - \frac{1}{2} a_{rel}(0)t_w^2 - d_z)$$

$$= a_v(0) \, (v(0) + a(0)t_w)^2 \, , \tag{40}$$

wobei in Gleichung (33) d(0) durch $d_{NB}$, v(0) durch $v_{NB}$ und $v_v(0)$ durch $v_{v,NB}$ ersetzt wurde. Aus Gleichung (40) folgt

$$(a_{NB}(a_v^2(0) + a_v(0)a_{rel}(0)) - a_v(0)a^2(0))t_w^2$$
$$+ 2a_v(0) \, (a_{NB}v_v(0) - a(0)v(0) + a_{NB}v_{rel}(0))t_w \tag{41}$$
$$+ a_{NB}v_v^2(0) - a_v(0)v^2(0) - 2a_{NB}a_v(0) \, (d(0) - d_z) = 0$$

und daraus unter Verwendung der Gleichungen (9) und (7)

$$a_v(0)a(0) \, (a_{NB} - a(0))t_w^2 + 2a_v(0) \, (a_{NB} - a(0))v(0)t_w$$
$$+ a_{NB}v_v^2(0) - a_v(0)v^2(0) - 2a_{NB}a_v(0) \, (d(0) - d_z) = 0 \, . \tag{42}$$

Die Auslösung der Fahrerwarnung erfolgt also im zweiten Fall, wenn die in Gleichung (42) angegebene Warnbedingung erfüllt ist.

Die Fahrerwarnung soll aus wenigstens zwei Warnstufen bestehen, die zeitlich nacheinander ausgelöst werden, wobei jeder Warnstufe eine vorgegebene Warnstufenzeitdauer zugeordnet ist. Eine vorgegebene Warnstufenzeitdauer $t_h$ vor Auslösung des selbsttätigen Notbremsvorgangs soll eine Warnstufe ausgelöst werden, in der die Fahrerwarnung in haptisch wahrnehmbarer Weise erfolgt, wiederum eine vorgegebene Warnstufenzeitdauer $t_{oa}$ vor Auslösung der haptischen Fahrerwarnung soll eine weitere Warnstufe ausgelöst werden, in der die Fahrerwarnung in optisch und/oder akustisch wahrnehmbarer Weise erfolgt. Die Warnzeitdauer $t_w$ der Fahrerwarnung ist in diesem Fall durch die Summe der vorgegebenen Warnstufenzeitdauer $t_{oa}$ der optischen und/oder akustischen Fahrerwarnung und der vorgegebenen Warnstufenzeitdauer $t_h$ der haptischen Fahrerwarnung gegeben. Die haptische Fahrerwarnung erfolgt in Form einer Teilbremsung des Fahrzeugs mit einer vorgegebenen Teilbremsverzögerung $a_{TB}$, die kleiner als die vorgegebene Notbremsverzögerung $a_{NB}$ ist. Dementsprechend muss sowohl die Geschwindigkeitsänderung während der optischen und/oder akustischen als auch während der haptischen Fahrerwarnung getrennt berücksichtigt werden.

Der Abstand und die Relativgeschwindigkeit zum Zeitpunkt der Auslösung der Fahrerwarnung werden durch

$$v_{rel}(0) = v_{rel,NB}(0) - a_{rel}(0)t_{oa} - a_{rel,TB}(0)t_h \, , \tag{44}$$

$$d(0) = d_{NB} + (t_h + t_{oa})v_{rel}(0) + t_h t_{oa} a_{rel}(0) + \frac{1}{2} t_{oa}^2 a_{rel}(0) + \frac{1}{2} t_h^2 a_{rel,h}(0) \, , \tag{45}$$

mit

$$a_{rel,h}(0) = a_{TB} - a_v(0) \tag{46}$$

beschrieben. Hierbei ist $v_{rel,NB}$ die Relativgeschwindigkeit und $d_{NB}$ der Abstand zwischen Fahrzeug und vorausfahrendem Fahrzeug zum Zeitpunkt der Auslösung des selbsttätigen Notbremsvorgangs. Werden die Gleichungen (44) und (45) in Gleichung (26) eingesetzt, so ergibt sich im ersten Fall

$$- 2(a_{NB} - a_v(0)) (d(0) - (t_{oa} + t_h)v_{rel}(0) - t_h t_{oa} a_{rel}(0)$$

$$- \frac{1}{2} t_{oa}^2 a_{rel}(0) - \frac{1}{2} t_h^2 a_{rel,h}(0) - d_z) = (v_{rel}(0) + a_{rel}(0)t_{oa} + a_{rel,h}(0)t_h)^2 ,$$

$$(47)$$

wobei in Gleichung (26) d(0) durch $d_{NB}$ und $v_{rel}(0)$ durch $v_{rel,NB}$ ersetzt wurde. Daraus folgt

$$a_{rel}(0) (a_{NB} - a(0))t_{oa}^2$$
$$+ 2( (a_{NB} - a(0))v_{rel}(0) + (a_{NB} - a_{TB})a_{rel}(0)t_h)t_{oa}$$
$$- 2(a_{NB} - a_v(0)) (d(0) - d_z) + 2(a_{NB} - a_v(0))v_{rel}(0)t_h \qquad (48)$$
$$+ (a_{NB} - a_v(0))a_{rel,h}(0)t_h^2 - (v_{rel}(0) + a_{rel,h}(0)t_h)^2$$
$$= 0 .$$

Die Auslösung der Fahrerwarnung mit den beiden Warnstufen erfolgt im ersten Fall, wenn die in Gleichung (48) angegebene Warnbedingung erfüllt ist.
Weiterhin gilt für die Geschwindigkeiten von Fahrzeug und vorausfahrendem Fahrzeug zum Zeitpunkt der Auslösung der Fahrerwarnung

$$v_v(0) = v_{v,NB} - a_v(0) (t_{oa} + t_h) , \qquad (49)$$

$$v(0) = v_{NB} - a(0)t_{oa} - a_{TB}t_h . \qquad (50)$$

Einsetzen der Gleichungen (49), (50) und (45) in Gleichung (33) ergibt im zweiten Fall

$$a_{NB}(v_v(0) + a_v(0) (t_{oa} + t_h))^2$$
$$- 2a_v(0)a_{NB}(d(0) - (t_h + t_{oa})v_{rel}(0) - t_h t_{oa} a_{rel}(0)$$
$$- \frac{1}{2} a_{rel}(0)t_{oa}^2 - \frac{1}{2} a_{rel,h}(0)t_h^2 - d_z)) \qquad (51)$$
$$= a_v(0) (v(0) + a(0)t_{oa} + a_{TB}t_h)^2 ,$$

wobei in Gleichung (33) d(0) durch $d_{NB}$, v(0) durch $v_{NB}$ und $v_v(0)$ durch $v_{v,NB}$ ersetzt wurde. Daraus folgt

$$a_{NB}(v_v(0) + a_v(0)t_h) + a_v(0)t_{oa})^2$$
$$- 2a_v(0)a_{NB}(d - t_h v_{rel}(0) - t_{oa}v_{rel}(0) - t_h t_{oa}a_{rel}(0)$$
$$- \frac{1}{2} a_{rel}(0)t_{oa}^2 - \frac{1}{2} a_{rel,h}(0)t_h^2 - d_z) \qquad (52)$$
$$= a_v(0) ( (v(0) + a_{TB}t_h) + a(0)t_{oa})^2$$

und schließlich

$$a_v(0)a(0) (a_{NB} - a(0) )t_{oa}^2$$
$$+ (2a_{NB}a_v(0) (v_v(0) + a_v(0)t_h) + 2a_{NB}a_v(0)v_{rel}(0) + 2a_{NB}a_v(0)a_{rel}(0)t_h$$
$$- 2a_v(0)a(0) (v(0) + a_{TB}t_h) )t_{oa} + a_{NB}(v_v(0) + a_v(0)t_h)^2 - 2a_{NB}a_v(0) (d(0) - d_z)$$
$$+ 2a_{NB}a_v(0)t_h v_{rel}(0) + a_v(0)a_{NB}a_{rel,h}(0)t_h^2 - a_v(0) (v(0) + a_{TB}t_h)^2 = 0 .$$
$$(53)$$

Gleichung (53) kann weiter vereinfacht werden,

$$a_v(0)a(0) (a_{NB} - a(0) )t_{oa}^2$$
$$+ (2a_{NB}a_v(0) (v(0) + a(0)t_h) - 2a_v(0)a(0) (v(0) + a_{TB}t_h) )t_{oa}$$
$$+ a_{NB}(v_v(0) + a_v(0)t_h)^2 - 2a_{NB}a_v(0) (d(0) - d_z) + 2a_{NB}a_v(0)t_h v_{rel}(0)$$
$$+ a_v(0)a_{NB}a_{rel,h}(0)t_h^2 - a_v(0) (v(0) + a_{TB}t_h)^2$$
$$= 0 .$$
$$(54)$$

Die Auslösung der Fahrerwarnung mit den beiden Warnstufen erfolgt also im zweiten Fall, wenn die in Gleichung (54) angegebene Warnbedingung erfüllt ist.

In Fig. 2 ist ein Ausführungsbeispiel des erfindungsgemäßen Verfahrens in Form eines Flussdiagramms dargestellt. Das Verfahren wird in einem ersten Hauptschritt 60 bei Aktivierung bzw. Deaktivierung der Assistenzfunktion durch den Fahrer des Fahrzeugs gestartet bzw. beendet.

In einem zweiten Hauptschritt 61 wird von der Auswerteeinheit 7 auf Basis des mittels der Sensoreinrichtung 11 ermittelten Abstands d und der Relativgeschwindigkeit $v_{rel}$ zwischen Fahrzeug und vorausfahrendem Fahrzeug und der mittels der Raddrehzahlsensoren 20 ermittelten Geschwindigkeit v des Fahrzeugs die Geschwindigkeit $v_v$ des vorausfahrenden Fahrzeugs, die Beschleunigung a des Fahrzeugs, die Beschleunigung $a_v$ des vorausfahrenden Fahrzeugs und die Relativbeschleunigung $a_{rel}$ zwischen Fahrzeug und vorausfahrendem Fahrzeug bestimmt. Die zuvor aufgezählten Größen sind hierbei im allgemeinen Funktionen der Zeit t. Weiterhin erfolgt im zweiten Hauptschritt 61 die Vorgabe der Warnzeitdauer $t_w$, einer ersten vorgegebenen Warnstufenzeitdauer $t_{oa}$, einer zweiten vorgegebenen Warnstufenzeitdauer $t_h$, des Zielsicherheitsabstands $d_z$, der Zielrelativgeschwindigkeit $v_{rel,z}$, der Teilbremsverzögerung $a_{TB}$, der relativen Teilbremsverzögerung $a_{rel,h}$ und der Notbremsverzögerung $a_{NB}$. Diese Größen sind hierbei jeweils entweder in fester Weise oder aber einstellbar vorgegeben. Eine Einstellung erfolgt beispielsweise in Abhängigkeit der Fahrzeugmasse, des Bremsbelagreibwerts der Radbremseinrichtungen, der Fahrbahnbeschaffenheit oder der Sichtverhältnisse. Die Notbremszeitdauer $t_{NB}$ kann hierbei aus den zuvor genannten Größen berechnet werden.

In einem dritten Hauptschritt 62 wird überprüft, ob eine durch die Gleichung (48) bzw. (54) gegebene erste Warnstufenbedingung zur Auslösung einer ersten Warnstufe, in der die Fahrerwarnung optisch und/oder akustisch erfolgt, erfüllt ist.

Ist die erste Warnstufenbedingung erfüllt, so wird in einem vierten Hauptschritt 63 die erste Warnstufe der Fahrerwarnung ausgelöst. Gleichzeitig wird ein erster Zeitzähler $T_1$ gestartet. In der ersten Warnstufe erfolgt die Fahrerwarnung in optisch und/oder akustisch wahrnehmbarer Weise. Eine optische Fahrerwarnung wird beispielsweise in Form aufleuchtender Signale oder Gefahrensymbole oder durch Einblendung der verbleibenden Zeit bis zur Auslösung des selbsttätigen Notbremsvorgangs mittels der optischen Warneinrichtung 45 umgesetzt. Bei einer akustischen Fahrerwarnung hingegen wird beispielsweise ein Alarmsignal oder einer Sprachwarnung mittels der akustischen Warneinrichtung 46 abgegeben, darüberhinaus ist es beispielsgemäß vorgesehen, zusätzlich Radio und Telefon stummzuschalten, um eine Ablenkung des Fahrers zu vermeiden.

Ist die erste Warnstufenbedingung hingegen nicht erfüllt, so kehrt der Verfahrensablauf wieder zum zweiten Hauptschritt 61 zurück.

Wird in einem fünften Hauptschritt 64 das Vorliegen eines Abbruchkriteriums - beispielsgemäß das Vorliegen von Fahreraktivität und/oder eine Verringerung der Auffahrgefahr - festgestellt, so wird in einem ersten Nebenschritt 80 überprüft, ob der erste Zeitzähler $T_1$ kleiner als die vorgegebene Warnzeitdauer $t_w$ ist. Ist das der Fall, kehrt der Verfahrensablauf solange zum ersten Nebenschritt 60 zurück, bis der erste Zeitzähler $T_1$ zumindest gleich der vorgegebenen Warnzeitdauer $t_w$ ist. Ist das der Fall, wird in einem nachfolgenden zweiten Nebenschritt 81 die erste Warnstufe der Fahrerwarnung beendet, und der Verfahrensablauf kehrt wieder zum zweiten Hauptschritt 61 zurück. Somit wird die in der ersten Warnstufe erfolgende optische und/oder akustische Fahrerwarnung bis zum Ende der Warnzeitdauer $t_w$ aufrechterhalten, um den Fahrer auf eine potentiell bestehende Auffahrgefahr hinzuweisen. Weitere Warnstufen bzw. der selbsttätige Notbremsvorgang werden aufgrund des erfüllten Abbruchkriteriums nicht ausgelöst.

Ist hingegen das Abbruchkriterium nicht erfüllt, wird in einem siebten Hauptschritt 66 eine zweite Warnstufe der Fahrerwarnung ausgelöst, sobald in einem vorhergehenden sechsten Hauptschritt 65 festgestellt wird, dass der erste Zeitzähler $T_1$ zumindest gleich der ersten vorgegebenen Warnstufenzeitdauer $t_{oa}$ ist. Ist der erste Zeitzähler $T_1$ hingegen kleiner als die erste vorgegebene Warnstufenzeitdauer $t_{oa}$, kehrt der Verfahrensablauf wieder zum fünften Hauptschritt 64 zurück.

In der zweiten Warnstufe erfolgt die Fahrerwarnung in haptisch wahrnehmbarer Weise, und zwar in Form eines Teilbremsvorgangs des Fahrzeugs mit der vorgegebenen Teilbremsverzögerung $a_{TB}$. Mit Auslösung der zweiten Warnstufe wird gleichzeitig ein zweiter Zeitzähler $T_2$ gestartet.

In diesem Ausführungsbeispiel wird von insgesamt zwei Warnstufen ausgegangen, aus der die Fahrerwarnung besteht. Denkbar ist auch eine beliebige andere Anzahl von Warnstufen, wobei die Fahrerwarnung jeweils in optisch und/oder akustisch und/oder haptisch wahrnehmbarer Weise erfolgt.

Wird in einem achten Hauptschritt 67 erkannt, dass das Abbruchkriterium - beispielsgemäß Vorliegen von Fahreraktivität und/oder Verringerung der Auffahrgefahr - erfüllt ist, so wird in einem dritten Nebenschritt 82 die erste Warnstufe und die zweite Warnstufe der Fahrerwarnung beendet, und der Verfahrensablauf kehrt wieder zum zweiten Hauptschritt 61 zurück. Hierbei ist es auch vorstellbar, die erste Warnstufe bis zum Ende der Warnzeitdauer $t_w$ aufrechterhalten, um den Fahrer auf eine potentiell bestehende Auffahrgefahr hinzuweisen.

Ist jedoch das Abbruchkriterium im achten Hauptschritt 67 nicht erfüllt, wird in einem zehnten Hauptschritt 69 die erste und die zweite Warnstufe der Fahrerwarnung beendet und der selbsttätige Notbremsvorgang durch entsprechende Ansteuerung der Bremsmittel 36 und der Antriebsmittel 38 ausgelöst, sobald in einem vorhergehenden neunten Hauptschritt 69 festgestellt wird, dass der zweite Zeitzähler $T_2$ zumindet gleich der zweiten vorgegebenen Warnstufenzeitdauer $t_h$ ist. Gleichzeitig erfolgt eine Warnung vorausfahrender und/oder hinterherfahrender Fahrzeuge, indem die Leuchteinrichtungen 48 des Fahrzeugs, zu denen beispielsweise die Warnblinker, die Bremslichter oder das Fahr- oder Fernlicht gehören, oder die Fahrzeughupe 47 betätigt werden. Mit Auslösung des selbsttätigen Notbremsvorgangs wird außerdem ein Notbremszeitzähler $T_{NB}$ gestartet.

In einem elften Hauptschritt 70 wird überprüft, ob der Notbremszeitzähler $T_{NB}$ kleiner als die ermittelte Notbremszeitdauer $t_{NB}$ ist. Solange das nicht der Fall ist, kehrt der Verfahrensablauf zum elften Hauptschritt 70 zurück. Ein bereits ausgelöster selbsttätiger Notbremsvorgang kann also nicht frühzeitig abgebrochen werden. Sobald der Notbremszeitzähler $T_{NB}$ zumindest gleich der ermittelten Notbremszeitdauer $t_{NB}$ ist, wird in einem vierten Nebenschritt 83 sowohl die erste Warnstufe der Fahrerwarnung als auch der selbsttätige Notbremsvorgang beendet, wobei der Verfahrensablauf anschließend wieder zum zweiten Hauptschritt 61 zurückkehrt.

Das im fünften Hauptschritt 64 und im sechsten Hauptschritt 67 überprüfte Abbruchkriterium wird dann erfüllt, wenn durch Fahreraktivität auf die Aufmerksamkeit des Fahrers geschlossen werden kann, oder wenn durch Verringerung der Auffahrgefahr keine Notsituation mehr besteht. Das Vorliegen von Fahreraktivität wird aufgrund einer Betätigung wenigstens eines der Bedienelemente des Fahrzeugs erkannt, wobei das Bedienelement insbesondere zur Änderung der Längs- oder Querdynamik des Fahrzeugs dient. In Zusammenhang mit einer Änderung der Längs- oder Querdynamik stehen beispielsweise Fahrpedal 8, Bremspedal 9, Kupplungspedal 10 oder Lenkrad 18. Aber auch infolge einer Betätigung des Richtungsgebers 25 kann auf die Aufmerksamkeit des Fahrers geschlossen werden. Im Falle des Fahrpedals 8, des Bremspedals 9, des Kupplungspedals 10 bzw. des Lenkrads 18 ist es zweckmäßig, erst dann auf eine Fahreraktivität zu schließen, wenn die Änderung der Fahrpedalauslenkung 1, der Bremspedalauslenkung s, der Kupplungspedalauslenkung w oder des Lenkradwinkels $\alpha$ jeweils einen bestimmten, vorgegebenen Schwellenwert überschreitet.

Eine Verringerung der Auffahrgefahr wird beispielsweise anhand eines mit der Zeit zunehmenden Abstands

d zwischen Fahrzeug und vorausfahrendem Fahrzeug und/oder eines mit der Zeit abnehmenden Betrags der Relativgeschwindigkeit $v_{rel}$ zwischen Fahrzeug und vorausfahrendem Fahrzeug erkannt. Auch hier wird beispielsgemäß das Abbruchkriterium nur dann erfüllt, wenn die Zunahme des Abstands d zwischen Fahrzeug und vorausfahrendem Fahrzeug und/oder die Abnahme der Relativgeschwindigkeit $v_{rel}$ zwischen Fahrzeug und vorausfahrendem Fahrzeug über vorgegebenen Schwellenwerten liegen.

Fig. 2b zeigt ein alternatives Ausführungsbeispiel des erfindungsgemäßen Verfahrens in Form einer Ergänzung des in Fig. 2a dargestellten Flussdiagramms. Die zweite Warnstufe der Fahrerwarnung wird hier nur dann ausgelöst, wenn in einem ersten Zusatzschritt 65' festgestellt wird, dass eine zugehörige, gegebene zweite Warnstufenbedingung gemäß Gleichung (37) bzw. (42) erfüllt ist. Ist dies nicht der Fall, wird in einem fünften Nebenschritt 84 überprüft, ob der erste Zeitzähler $T_1$ kleiner als die vorgegebene Warnzeitdauer $t_w$ ist. Ist das der Fall, kehrt der Verfahrensablauf solange zum fünften Nebenschritt 84 zurück, bis der erste Zeitzähler $T_1$ zumindest gleich der vorgegebenen Warnzeitdauer $t_w$ ist. Ist das der Fall, wird in einem nachfolgenden sechsten Nebenschritt 88 die erste Warnstufe der Fahrerwarnung beendet, und der Verfahrensablauf kehrt wieder zum zweiten Hauptschritt 61 zurück. So wird auch hier die in der ersten Warnstufe erfolgende optische und/oder akustische Fahrerwarnung bis zum Ende der Warnzeitdauer $t_w$ aufrechterhalten, um den Fahrer auf eine potentiell bestehende Auffahrgefahr hinzuweisen.

Fig. 2c zeigt ein weiteres alternatives Ausführungsbeispiel des erfindungsgemäßen Verfahrens in Form einer weiteren Ergänzung des in Fig. 2a dargestellten Flussdiagramms. Der selbsttätige Notbremsvorgang wird nur dann ausgelöst, wenn in einem zweiten Zusatzschritt 68' festgestellt wird, ob eine zugehörige, gegebene Notbremsbedingung gemäß Gleichung (37) bzw. (42) erfüllt wird. Ist dies nicht der Fall, wird in einem siebten Nebenschritt 86 die zweite Warnstufe der Fahrerwarnung beendet, und der Verfahrensablauf kehrt wieder zum zweiten Hauptschritt 61 zurück.

Hierbei ist es vorstellbar, die in Fig. 2b und 2c gezeigten Ausführungsbeispiele miteinander zu kombinieren.

Fig. 3 zeigt schließlich eine beispielhafte Darstellung des zeitlichen Ablaufs des erfindungsgemäßen Verfahrens, unter der Annahme, dass kein Abbruchkriterium erfüllt ist und der selbsttätige Notbremsvorgang ausgelöst wird. Bei Auslösung der ersten Warnstufe erfolgt die Fahrerwarnung in optisch und/oder akustisch wahrnehmbarer Weise, gleichzeitig wird der erste Zeitzähler $T_1$ gestartet. Erreicht der erste Zeitzähler $T_1$ die erste vorgegebene Warnstufenzeitdauer $t_{oa}$, wird die zweite Warnstufe ausgelöst, die in haptisch wahrnehmbarer Weise in Form eines Teilbremsvorgangs erfolgt. Gleichzeitig wird der zweite Zeitzähler $T_2$ gestartet. Die erste Warnstufe der Fahrerwarnung wird weiterhin aufrechterhalten, wobei es auch denkbar ist, diese mit Auslösung der zweiten Warnstufe zu beenden. Erreicht der zweite Zeitzähler die zweite vorgegebene Warnstufenzeitdauer $t_h$, wird die zweite Warnstufe und gegebenenfalls auch die erste Warnstufe der Fahrerwarnung beendet und der selbsttätige Notbremsvorgang ausgelöst. Gleichzeitig wird der Notbremszeitzähler $T_{NB}$ ausgelöst. Erreicht der Notbremszeitzähler $T_{NB}$ die ermittelte Notbremszeitdauer $t_{NB}$, wird die erste Warnstufe der Fahrerwarnung und der selbsttätige Notbremsvorgang beendet.

## Patentansprüche

1. Verfahren zur Auslösung eines selbsttätigen Notbremsvorgangs eines Fahrzeugs zur Vermeidung eines Auffahrens des Fahrzeugs auf ein vorausfahrendes Fahrzeug bzw. zur Verminderung der Auffahrfolgen, wobei eine Fahrerwarnung ausgelöst wird, wenn zumindest eine vorgegebene Warnbedingung erfüllt ist, wobei die Erfüllung der Warnbedingung angibt, dass aufgrund der unter Berücksichtigung der ermittelten Beschleunigung (a) des Fahrzeugs bestimmten Fahrsituation des Fahrzeugs und einer vorgegeben Notbremsverzögerung ($a_{NB}$) der selbsttätige Notbremsvorgang auszulösen ist, wobei in die Warnbedingung als Zielbedingungen ein vorgegebener Zielsicherheitsabstand ($d_z$) und eine vorgegebene Zielrelativgeschwindigkeit ($V_{rel,z}$) zwischen Fahrzeug und vorausfahrendem Fahrzeug eingehen, die mit Beendigung des selbsttätigen Notbremsvorgangs zu erreichen sind,
**dadurch gekennzeichnet,**
**dass** zusätzlich zur ermittelten Beschleunigung (a) des Fahrzeugs die ermittelte aktuell vorliegende Relativbeschleunigung ($a_{rel}$) zwischen Fahrzeug und vorausfahrendem Fahrzeug zur Bestimmung der in die Warnbedingung eingehenden momentanen Fahrsituation des Fahrzeugs berücksichtigt wird, wobei der selbsttätige Notbremsvorgang erst nach Auslösung der Fahrerwarnung und anschließendem Ablauf einer vorgegebenen Warnzeitdauer ($t_w$) auszulösen ist.

2. Verfahren nach Anspruch 1,
**dadurch gekennzeichnet,**
**dass** die Fahrerwarnung in für den Fahrer des Fahrzeugs optisch und/oder akustisch und/oder haptisch wahrnehmbarer Weise erfolgt.

3. Verfahren nach Anspruch 2,
**dadurch gekennzeichnet,**

**dass** eine haptisch für den Fahrer des Fahrzeugs wahrnehmbare Fahrerwarnung in Form eines Teilbremsvorgangs des Fahrzeugs mit einer vorgegebenen Teilbremsverzögerung ($a_{TB}$) erfolgt, wobei die vorgegebene Teilbremsverzögerung ($a_{TB}$) kleiner als die vorgegebene Notbremsverzögerung ($a_{NB}$) ist.

4.  Verfahren nach einem der Ansprüche 1 bis 3,
    **dadurch gekennzeichnet,**
    **dass** der selbsttätige Notbremsvorgang nur dann ausgelöst wird, wenn eine gegebene Notbremsbedingung erfüllt wird und die vorgegebene Warnzeitdauer ($t_w$) abgelaufen ist.

5.  Verfahren nach einem der Ansprüche 1 bis 4,
    **dadurch gekennzeihnet,**
    dass die Notbremsverzögerung ($a_{NB}$) fest oder einstellbar vorgegeben ist.

6.  Verfahren nach einem der Ansprüche 1 bis 5,
    **dadurch gekennzeichnet,**
    **dass** die Warnzeitdauer ($t_w$) fest oder einstellbar vorgegeben ist.

7.  Verfahren nach einem der Ansprüche 1 bis 6,
    **dadurch gekennzeichnet,**
    **dass** die Zielrelativgeschwindigkeit ($v_{rel,z}$) fest oder einstellbar vorgegeben ist.

8.  Verfahren nach Anspruch 7,
    **dadurch gekennzeichnet,**
    **dass** der Wert einer fest vorgegebenen Zielrelativgeschwindigkeit ($v_{rel,z}$) zwischen Fahrzeug und vorausfahrendem Fahrzeug in etwa Null beträgt.

9.  Verfahren nach einem der Ansprüche 1 bis 8,
    **dadurch gekennzeichnet,**
    **dass** der Zielsicherheitsabstand ($d_z$) fest oder einstellbar vorgegeben ist.

10. Verfahren nach einem der Ansprüche 1 bis 9,
    **dadurch gekennzeichnet,**
    **dass** bei Vorliegen von Fahreraktivität und/oder bei Verringerung der Auffahrgefahr die Auslösung der Fahrerwarnung unterbleibt.

11. Verfahren nach einem der Ansprüche 1 bis 10,
    **dadurch gekennzeichnet,**
    **dass** bei Vorliegen von Fahreraktivität und/oder bei Verringerung der Auffahrgefahr eine bereits ausgelöste Fahrerwarnung beendet und/oder verändert wird und/oder die Auslösung des selbsttätigen Notbremsvorgangs unterbleibt.

12. Verfahren nach einem der Ansprüche 1 bis 11,
    **dadurch gekennzeichnet,**
    **dass** der selbsttätige Notbremsvorgang automatisch bei Ablauf der vorgegebenen Warnzeitdauer ($t_w$) ausgelöst wird, sofern die Fahrerwarnung nicht während der vorgegebenen Warnzeitdauer ($t_w$) abgebrochen wird.

13. Verfahren nach einem der Ansprüche 1 bis 12,
    **dadurch gekennzeichnet,**
    **dass** ein bereits ausgelöster selbsttätiger Notbremsvorgang abgebrochen wird, wenn eine ermittelte Notbremszeitdauer ($t_{NB}$) und/oder wenn die vorgegebene Zielrelativgeschwindigkeit ($V_{rel,z}$) und der vorgegebene Zielsicherheitsabstand ($d_z$) erreicht sind.

14. Verfahren nach einem der Ansprüche 1 bis 13,
    **dadurch gekennzeichnet,**
    **dass** die Fahrerwarnung aus wenigstens zwei Warnstufen besteht, die innerhalb der vorgegebenen Warnzeitdauer ($t_w$) der Fahrerwarnung zeitlich nacheinander ausgelöst werden, wobei jeder Warnstufe eine vorgegebene Warnstufenzeitdauer zugeordnet ist.

**15.** Verfahren nach Anspruch 14,
**dadurch gekennzeichnet,**
**dass** die Warnstufenzeitdauer einer Warnstufe fest oder einstellbar vorgegeben ist.

**16.** Verfahren nach Anspruch 14 oder 15,
**dadurch gekennzeichnet,**
**dass** nach Auslösung einer ersten Warnstufe nur dann wenigstens eine weitere Warnstufe ausgelöst wird, wenn eine der weiteren Warnstufe jeweils zugeordnete, vorgegebene Warnstufenbedingung erfüllt ist.

**17.** Verfahren nach einem der Ansprüche 14 bis 16,
**dadurch gekennzeichnet,**
**dass** bei Vorliegen von Fahreraktivität und/oder bei Verringerung der Auffahrgefahr wenigstens eine der bereits ausgelösten Warnstufen beendet wird und/oder die Auslösung weiterer Warnstufen unterbleibt.

**18.** Verfahren nach einem der Ansprüche 1 bis 17,
**dadurch gekennzeichnet,**
**dass** das Vorliegen von Fahreraktivität aufgrund einer Betätigung wenigstens eines Bedienelements, das insbesondere zur Änderung der Längs- oder Querdynamik des Fahrzeugs dient, erkannt wird.

**19.** Verfahren nach einem der Ansprüche 1 bis 18,
**dadurch gekennzeichnet,**
**dass** eine Verringerung der Auffahrgefahr anhand eines mit der Zeit zunehmenden Abstands (d) zwischen Fahrzeug und vorausfahrendem Fahrzeug und/oder einer mit der Zeit abnehmenden Relativgeschwindigkeit ($V_{rel}$) zwischen Fahrzeug und vorausfahrendem Fahrzeug erkannt wird.

**20.** Verfahren nach einem der Ansprüche 1 bis 19,
**dadurch gekennzeichnet,**
**dass** die momentane Fahrsituation des Fahrzeugs in Abhängigkeit des ermittelten Abstands (d) zwischen Fahrzeug und vorausfahrendem Fahrzeug und/oder der ermittelten Relativgeschwindigkeit ($v_{rel}$) zwischen Fahrzeug und vorausfahrendem Fahrzeug und/oder der ermittelten Geschwindigkeit (v) des Fahrzeugs und/oder der ermittelten Relativbeschleunigung ($a_{rel}$) zwischen Fahrzeug und vorausfahrendem Fahrzeug und/oder der ermittelten Beschleunigung (a) des Fahrzeugs und/oder der Fahrbahnneigung und/oder von Reibwerten zwischen der Fahrbahn und den Fahrzeugrädern bestimmt wird.

**21.** Verfahren nach einem der Ansprüche 1 bis 20,
**dadurch gekennzeichnet,**
**dass** bei Auslösung des selbsttätigen Notbremsvorgangs eine Warnung vorausfahrender und/oder hinterherfahrender Fahrzeuge erfolgt.

**22.** Vorrichtung zur Durchführung eines selbsttätigen Notbremsvorgangs eines Fahrzeugs zur Vermeidung eines Auffahrens des Fahrzeugs auf ein vorausfahrendes Fahrzeug bzw. zur Verminderung der Auffahrfolgen, mit einer Auswerteeinheit (7), wobei bei Erfüllung einer in der Auswerteeinheit (7) abgelegten vorgegebenen Warnbedingung von der Auswerteeinheit (7) eine Fahrerwarnung ausgelöst wird, wobei die Erfüllung der Warnbedingung angibt, dass aufgrund der unter Berücksichtigung der ermittelten Beschleunigung (a) des Fahrzeugs gegebenen momentanen Fahrsituation des Fahrzeugs und einer vorgegebenen Notbremsverzögerung ($a_{NB}$) von der Auswerteeinheit (7) der selbsttätige Notbremsvorgang durch geeignete Ansteuerung von Bremsmitteln (38) des Fahrzeugs auszulösen ist, wobei in die Warnbedingung als Zielbedingungen ein vorgegebener Zielsicherheitsabstand ($d_z$) und eine vorgegebene Zielrelativgeschwindigkeit ($V_{rel,z}$) zwischen Fahrzeug und vorausfahrendem Fahrzeug eingehen, die mit Beendigung des selbsttätigen Notbremsvorgangs zu erreichen sind,
**dadurch gekennzeichnet,**
**dass** zusätzlich zur ermittelten Beschleunigung (a) des Fahrzeugs die ermittelte aktuell vorliegende Relativbeschleunigung ($a_{rel}$) zwischen Fahrzeug und vorausfahrendem Fahrzeug zur Bestimmung der in die Warnbedingung eingehenden momentanen Fahrsituation des Fahrzeugs berücksichtigt wird, wobei der selbsttätige Notbremsvorgang erst nach Auslösung der Fahrerwarnung und anschließendem Ablauf einer vorgegebenen Warnzeitdauer ($t_w$) auszulösen ist.

**Claims**

1. Method for triggering an automatic emergency braking process of a vehicle in order to avoid the vehicle having a rear end collision with a vehicle travelling in front and/or in order to reduce the consequences of a rear end collision, wherein a driver warning is triggered if at least one predefined warning condition is fulfilled, wherein the fulfilment of the warning condition specifies that, owing to the driving situation of the vehicle, determined in view of the registered acceleration (a) of the vehicle and a predefined emergency braking deceleration ($a_{NB}$), the automatic emergency braking process is to be triggered, wherein the warning condition includes, as target conditions, a predefined target safety distance ($d_z$) and a predefined target relative speed ($v_{rel,z}$) between the vehicle and vehicle travelling in front, which are to be attained after the automatic emergency braking process has finished, **characterized in that**, in addition to the registered acceleration (a) of the vehicle, the registered, currently occurring relative acceleration ($a_{rel}$) between the vehicle and vehicle travelling in front is taken into account in order to determine the instantaneous driving situation of the vehicle which is included in the warning condition, wherein the automatic emergency braking process is not to be triggered until after the driver warning has been triggered and subsequent expiry of a predefined warning time period ($t_w$).

2. Method according to Claim 1, **characterized in that** the driver warning takes place in a way which can be perceived visually and/or acoustically and/or haptically by the driver of the vehicle.

3. Method according to Claim 2, **characterized in that** a driver warning which can be perceived haptically by the driver of the vehicle takes place in the form of a partial braking process of the vehicle with a predefined partial braking deceleration ($a_{TB}$), wherein the predefined partial braking deceleration ($a_{TB}$) is smaller than the predefined emergency braking deceleration ($a_{NB}$).

4. Method according to one of Claims 1 to 3, **characterized in that** the automatic emergency braking process is triggered only if a given emergency braking condition is fulfilled and the predefined warning time period ($t_w$) has expired.

5. Method according to one of Claims 1 to 4, **characterized in that** the emergency braking deceleration ($a_{NB}$) is predefined in a permanent or adjustable fashion.

6. Method according to one of Claims 1 to 5, **characterized in that** the warning time period ($t_w$) is predefined in a permanent or adjustable fashion.

7. Method according to one of Claims 1 to 6, **characterized in that** the target relative speed ($v_{rel,z}$) is predefined in a permanent or adjustable fashion.

8. Method according to Claim 7, **characterized in that** the value of a permanently predefined target relative speed ($v_{rel,z}$) between the vehicle and vehicle travelling in front is approximately zero.

9. Method according to one of Claims 1 to 8, **characterized in that** the target safety distance ($d_z$) is predefined in a permanent or adjustable fashion.

10. Method according to one of Claims 1 to 9, **characterized in that**, when the driver is active and/or when the risk of a rear end collision is reduced, the driver warning is not triggered.

11. Method according to one of Claims 1 to 10, **characterized in that**, when the driver is active and/or when the risk of a rear end collision is reduced, a driver warning which has already been triggered is terminated and/or changed and/or the automatic emergency braking process is not triggered.

12. Method according to one of Claims 1 to 11, **characterized in that** the automatic emergency braking process is triggered automatically when the predefined warning time period ($t_w$) expires if the driver warning is not aborted during the predefined warning time period ($t_w$).

13. Method according to one of Claims 1 to 12, **characterized in that** an automatic emergency braking process which has already been triggered is aborted if a detected emergency braking time period ($t_{NB}$) and/or the predefined target relative speed ($V_{rel,z}$) and the predefined target safety distance ($d_z$) are attained.

14. Method according to one of Claims 1 to 13, **characterized in that** the driver warning is composed of at least two warning stages which are triggered in chronological succession within the predefined warning time period ($t_w$) of the driver warning, wherein each warning stage is assigned a predefined warning stage time period.

15. Method according to Claim 14, **characterized in that** the warning stage time period is predefined in a permanent or adjustable fashion.

16. Method according to Claim 14 or 15, **characterized in that**, after a first warning stage has been triggered, at least one further warning stage is triggered only if a predefined warning stage condition which is respectively assigned to the further warning stage is fulfilled.

17. Method according to one of Claims 14 to 16, **characterized in that**, when the driver is active and/or when the risk of a rear end collision is reduced, at least one of the warning stages which has already been triggered is terminated and/or further warning stages are not triggered.

18. Method according to one of Claims 1 to 17, **characterized in that** activity on the part of a driver is detected on the basis of an activation of at least one operator control element which is used, in particular, to change the longitudinal dynamics or lateral dynamics of the vehicle.

19. Method according to one of Claims 1 to 18, **characterized in that** a reduction in the risk of a rear end collision is detected by reference to a distance ($d$), which increases over time, between the vehicle and vehicle travelling in front and/or a relative speed ($v_{rel}$), which decreases over time, between the vehicle and vehicle travelling in front.

20. Method according to one of Claims 1 to 19, **characterized in that** the instantaneous driving situation of the vehicle is determined as a function of the detected distance ($d$) between the vehicle and the vehicle travelling in front and/or the detected relative speed ($v_{rel}$) between the vehicle and vehicle travelling in front and/or the detected speed ($v$) of the vehicle and/or of the detected relative acceleration ($a_{rel}$) between the vehicle and vehicle travelling in front and/or the detected acceleration ($a$) of the vehicle and/or of the inclination of the roadway and/or of coefficients of friction between the roadway and the vehicle's wheels.

21. Method according to one of Claims 1 to 20, **characterized in that**, when the automatic emergency braking process is triggered, a warning is issued to vehicles travelling in front and/or vehicles travelling behind.

22. Device for carrying out an automatic emergency braking process of a vehicle in order to avoid a rear end collision of the vehicle with a vehicle travelling in front and/or in order to reduce the consequences of a rear end collision, having an evaluation unit (7), wherein, when a predefined warning condition which is stored in the evaluation unit (7) is fulfilled, a driver warning is triggered by the evaluation unit (7), wherein the fulfilment of the warning condition specifies that, owing to the instantaneous driving situation of the vehicle, which has come about in view of the registered acceleration ($a$) of the vehicle, and a predetermined emergency braking deceleration ($a_{NB}$), the automatic emergency braking process is to be triggered by the evaluation unit (7) by suitable actuation of braking means (38) of the vehicle, wherein the warning condition includes, as target conditions, a predefined target safety distance ($d_z$) and a predefined target relative speed ($v_{rel,z}$) between the vehicle and vehicle travelling in front, which are to be attained when the automatic emergency braking process has finished, **characterized in that**, in addition to the registered acceleration ($a$) of the vehicle, the registered, currently occurring relative acceleration ($a_{rel}$) between the vehicle and vehicle travelling in front is taken into account in the determination of the instantaneous driving situation of the vehicle which is included in the warning condition, wherein the automatic emergency braking process is not to be triggered until after the driver warning has been triggered and subsequent expiry of a predefined warning time period ($t_w$).

## Revendications

1. Procédé pour déclencher un processus de freinage d'urgence à actionnement automatique d'un véhicule pour éviter une collision par l'arrière du véhicule contre un véhicule précédent ou pour réduire les conséquences de la collision, un avertissement du conducteur étant déclenché lorsqu'au moins une condition d'avertissement prédéterminée est remplie, le remplissage de la condition d'avertissement indiquant qu'il faut déclencher le processus de freinage d'urgence à actionnement automatique en raison de l'état de marche du véhicule déterminé en tenant compte de l'accélération détectée (a) du véhicule et d'un retard de freinage d'urgence prédéterminé ($a_{NB}$), la condition d'avertissement incluant comme conditions cibles une distance de sécurité cible prédéterminée ($d_z$) et une vitesse relative cible prédéterminée ($V_{rel, z}$) entre le véhicule et le véhicule précédent qui doivent être atteintes à l'achèvement du processus de freinage d'urgence à actionnement automatique,

**caractérisé en ce que**

en plus de l'accélération détectée (a) du véhicule, l'accélération relative détectée réellement présente ($a_{rel}$) entre le véhicule et le véhicule précédent est prise en compte pour déterminer l'état de marche instantané du véhicule incluse dans la condition d'avertissement, le processus de freinage d'urgence à actionnement automatique ne devant être déclenché qu'après le déclenchement de l'avertissement du conducteur suivi de l'écoulement d'une durée d'avertissement prédéterminée ($t_w$).

2. Procédé selon la revendication 1, **caractérisé en ce que** l'avertissement du conducteur est réalisé de manière optiquement et/ou acoustiquement et/ou haptiquement perceptible par le conducteur du véhicule.

3. Procédé selon la revendication 2, **caractérisé en ce qu'**un avertissement du conducteur haptiquement perceptible par le conducteur du véhicule est réalisé sous forme d'un processus de freinage partiel du véhicule avec un retard de freinage partiel prédéterminé ($a_{TB}$), le retard de freinage partiel prédéterminé ($a_{TB}$) étant inférieur au retard de freinage d'urgence prédéterminé ($a_{NB}$).

4. Procédé selon l'une quelconque des revendications 1 à 3, **caractérisé en ce que** le processus de freinage d'urgence à actionnement automatique n'est déclenché que lorsqu'une condition de freinage d'urgence est remplie et que la durée d'avertissement prédéterminée ($t_w$) est écoulée.

5. Procédé selon l'une quelconque des revendications 1 à 4, **caractérisé en ce que** le retard de freinage d'urgence ($a_{NB}$) est prédéterminé de manière fixe ou réglable.

6. Procédé selon l'une quelconque des revendications 1 à 5, **caractérisé en ce que** la durée d'avertissement ($t_w$) est prédéterminée de manière fixe ou réglable.

7. Procédé selon l'une quelconque des revendications 1 à 6, **caractérisé en ce que** la vitesse relative cible ($v_{rel, z}$) est prédéterminée de manière fixe ou réglable.

8. Procédé selon la revendication 7, **caractérisé en ce que** la valeur d'une vitesse relative cible prédéterminée de manière fixe ($V_{rel, z}$) entre le véhicule et le véhicule précédent est à peu près nulle.

9. Procédé selon l'une quelconque des revendications 1 à 8, **caractérisé en ce que** la distance de sécurité cible ($d_z$) est prédéterminée de manière fixe ou réglable.

10. Procédé selon l'une quelconque des revendications 1 à 9, **caractérisé en ce que**, en cas de présence d'une activité du conducteur et/ou en cas de réduction du risque de collision, le déclenchement de l'avertissement du conducteur ne se fait pas.

11. Procédé selon l'une quelconque des revendications 1 à 10, **caractérisé en ce que**, en présence d'une activité du conducteur et/ou en cas de réduction du risque de collision, un avertissement du conducteur déjà déclenché est arrêté et/ou modifié et/ou le déclenchement du processus de freinage d'urgence à actionnement automatique ne se fait pas.

12. Procédé selon l'une quelconque des revendications 1 à 11, **caractérisé en ce que** le processus de freinage d'urgence à actionnement automatique est déclenché automatiquement à l'écoulement de la durée d'avertissement prédéterminée ($t_w$) à condition que l'avertissement du conducteur n'ait pas été interrompu pendant la durée d'avertissement prédéterminée ($t_w$).

13. Procédé selon l'une quelconque des revendications 1 à 12, **caractérisé en ce qu'**un processus de freinage d'urgence à actionnement automatique déjà déclenché est interrompu lorsqu'une durée de freinage d'urgence détectée ($t_{NB}$) et/ou la vitesse relative cible prédéterminée ($V_{rel, z}$) et la distance de sécurité cible prédéterminée ($d_z$) sont atteintes.

14. Procédé selon l'une quelconque des revendications 1 à 13, **caractérisé en ce que** l'avertissement du conducteur est constitué d'au moins deux degrés d'avertissement qui sont déclenchées chronologiquement l'un après l'autre pendant la durée d'avertissement prédéterminée ($t_w$), une durée de degré d'avertissement prédéterminée étant associée à chaque degré d'avertissement.

**15.** Procédé selon la revendication 14, **caractérisé en ce que** la durée de degré d'avertissement d'un degré d'avertissement est prédéterminée de manière fixe ou réglable.

**16.** Procédé selon la revendication 14 ou 15, **caractérisé en ce que**, après le déclenchement d'un premier degré d'avertissement, au moins un autre degré d'avertissement est déclenché seulement lorsqu'une condition de degré d'avertissement prédéterminée associée à l'autre degré d'avertissement est remplie.

**17.** Procédé selon l'une quelconque des revendications 14 à 16, **caractérisé en ce que**, en présence d'une activité du conducteur et/ou en cas de réduction du risque de collision, au moins l'un des degrés d'avertissement déjà déclenchés est arrêté et/ou le déclenchement des autres degrés d'avertissement ne se fait pas.

**18.** Procédé selon l'une quelconque des revendications 1 à 17, **caractérisé en ce que** la présence d'une activité du conducteur est détectée en raison d'un actionnement d'au moins un élément de commande, qui sert en particulier à modifier la dynamique longitudinale ou transversale du véhicule.

**19.** Procédé selon l'une quelconque des revendications 1 à 18, **caractérisé en ce qu'**une réduction du risque de collision est détectée à l'aide d'une distance (d) entre le véhicule et le véhicule précédent qui augmente dans le temps et/ou d'une vitesse relative ($v_{rel}$) entre le véhicule et le véhicule précédent qui diminue dans le temps.

**20.** Procédé selon l'une quelconque des revendications 1 à 19, **caractérisé en ce que** l'état de marche instantané du véhicule est déterminé en fonction de la distance (d) détectée entre le véhicule et le véhicule précédent et/ou de la vitesse relative détectée ($v_{rel}$) entre le véhicule et le véhicule précédent et/ou de la vitesse détectée (v) du véhicule et/ou de l'accélération relative détectée ($a_{rel}$) entre le véhicule et le véhicule précédent et/ou de l'accélération détectée (a) entre le véhicule et le véhicule précédent et/ou de coefficients de frottement entre la chaussée et les roues du véhicule.

**21.** Procédé selon l'une quelconque des revendications 1 à 20, **caractérisé en ce que**, lors du déclenchement du processus de freinage d'urgence à actionnement automatique, il se produit un avertissement des véhicules précédents et/ou suivants.

**22.** Dispositif pour la réalisation d'un processus de freinage d'urgence à actionnement automatique d'un véhicule pour éviter une collision par l'arrière du véhicule contre un véhicule précédent ou pour réduire les conséquences de la collision, avec une unité d'évaluation (7) dans lequel, lorsqu'une condition d'avertissement prédéterminée déposée dans l'unité d'évaluation (7) est remplie, un avertissement de conducteur est déclenché par l'unité d'évaluation (7), le remplissage de la condition d'avertissement indiquant que le processus de freinage d'urgence à actionnement automatique doit être déclenché par l'unité d'évaluation (7) en raison de l'état de marche instantané du véhicule déterminé en tenant compte de l'accélération détectée (a) du véhicule et d'un retard de freinage d'urgence prédéterminé ($a_{NB}$), par une commande appropriée des moyens de freinage (38) du véhicule, la condition d'avertissement incluant comme conditions cibles une distance de sécurité cible prédéterminée ($d_z$) et une vitesse relative cible prédéterminée ($V_{rel, z}$) entre le véhicule et le véhicule précédent qui doivent être atteintes à l'achèvement du processus de freinage d'urgence à actionnement automatique,
**caractérisé en ce que**
en plus de l'accélération détectée (a) du véhicule, l'accélération relative détectée réellement présente ($a_{rel}$) entre le véhicule et le véhicule précédent est prise en compte pour déterminer l'état de marche instantané du véhicule incluse dans la condition d'avertissement, le processus de freinage d'urgence à actionnement automatique ne devant être déclenché qu'après le déclenchement de l'avertissement du conducteur suivi de l'écoulement d'une durée d'avertissement prédéterminée ($t_w$).

FIG.1

60 — ( Start / Ende )  FIG. 2a

61 — $t_w$, $t_{oa}$, $t_h$, $d_z$, $v_{rel,z}$, $a_{TB}$, $a_{rel,h}$, $a_{NB}$, $t_{NB}$, $d$, $v$, $v_v$, $v_{rel}$, $a$, $a_v$, $a_{rel}$

62 — 1.Warn-stufenbedingung erfüllt ? — Nein

Ja

63 — 1. Warnstufe der Fahrerwarnung auslösen (opt./akust./Stummschalt.) Zeitzähler $T_1$ starten

64 — Abbruch-kriterien erfüllt ? — Ja

Ja

Nein

65 — $T_1 < t_{oa}$ ?

FIG. 2b

Nein

66 — 2. Warnstufe der Fahrerwarnung auslösen (haptisch) Zeitzähler $T_2$ starten

80 — $T_1 < t_w$ ? — Ja

Nein

81 — 1. Warnstufe beenden

67 — Abbruch-kriterien erfüllt ? — Ja

Ja

Nein

68 — $T_2 < t_h$ ?

82 — 1.+ 2.Warnstufe beenden

FIG. 2c

Nein

69 — 1.+ 2. Warnstufe beenden NB auslösen Zeitzähler $T_{NB}$ starten

70 — $T_{NB} < t_{NB}$ ? — Nein

Ja

83 — NB beenden

von 65

2. Warnstufenbedingung
erfüllt
?

65'

Nein

84

$T_1 < t_w$ ?

Ja

Nein

1. Warnstufe beenden

85

Ja

nach 66

FIG.2b

von 68

NB-
Bedingung
erfüllt
?

68'

Nein

86

2. Warnstufe beenden

ja

nach 69

FIG.2c

$T_1 = 0$     $T_2 = 0$     $T_{NB} = 0$

$T_1, T_2, T_{NB}$

$t_{oa}$     $t_h$     $t_{NB}$

$t_w$

FIG.3